# EUROPEAN PATENT APPLICATION

(11) **EP 2 157 560 A2**
(43) Date of publication of application: **24.02.2010**
(21) Application number: 09007529.2
(22) Date of filing: 08.06.2009
(51) Int. Cl.: G09C 5/00, H04L 9/08

(54) **Document data encryption method and document data encryption system**

(30) Priority: 18.08.2008 JP 2008210171
(71) Applicant: Fujitsu Limited, Kawasaki-shi, Kanagawa 211-8588 (JP)
(72) Inventor: Masui, Motoo, Kawasaki-shi Kanagawa 211-8588 (JP); Ishii, Hideaki, Fukuoka-shi Fukuoka 814-8588 (JP); Anan, Taizo, Kawasaki-shi Kanagawa 211-8588 (JP); Takahashi, Jun, Kawasaki-shi Kanagawa 211-8588 (JP); Kuraki, Kensuke, Kawasaki-shi Kanagawa 211-8588 (JP); Nakagata, Shohei, Kawasaki-shi Kanagawa 211-8588 (JP)
(74) Representative: HOFFMANN EITLE

(57) **Abstract**

An encrypting device encrypts original document data by use of a password of an addressee, thereby generating encrypted document data. A decryption authority changing device, of which operating authority is held by the addressee, generates authority changing information M structured by encrypting the password of the addressee with a password of a proxy, and notifies a decrypting device of the information, of which the operating authority is held by the proxy. The decrypting device decrypts the password of the addressee by employing the password of the proxy, and decrypts the encrypted document data by use of the decrypted password of the addressee.

## Description

### CROSS-REFERENCE TO RELATED APPLICATIONS

This application is based upon and claims the benefit of prior Japanese Patent Application No. 2008-210171 filed on August 18, 2008, the entire contents of which are incorporated herein by reference.

### FIELD

The embodiments discussed herein are related to a document data encryption method and a document data encryption system.

### BACKGROUND

With the highly-sophisticated informatization over the recent years, such a type of information as to be conventionally conveyed by moving a paper medium can be circulated by transmitting electronic data. Thus, various categories of information are circulated by employing a variety of circulating means on one hand, and a necessity for protecting the information such as individual information and business confidentiality is socially recognized with establishment of the individual information protection law in 2003 in Japan on the other hand.

In this point, a technology generally utilized for the information circulated as the electronic data is a technology of encrypting the electronic data in a mode of enabling only the addressee to decrypt this electronic data prior to storing the electronic data in an e-mail or a packet for data transmission so that a content of the information does not leak out even if a third party intercepts the information in the middle of the circulation.

On the other hand, in a traditional information circulating mode in which the content of the information is printed on the paper medium and conveyed by a physical moving means such as forwarding by mail, the technology such as the encryption described above for preventing the leakage of the information is not yet utilized. Accordingly, if the paper medium is stolen in the middle of its movement by the third party or if mistakenly transferred to the third party, the content of the information easily leaked out to the third party simply by seeing the print surface. The information having a risk of the information leakage is exemplified by, e.g., a bill for purchasing a commercial article, particulars of a credit card etc, a clinical chart at a hospital, a report card at a school, a name list and so on.

Hence, the present applicant proposed a method, filed previously to Japanese Patent Office, of which Japanese Patent Laid-Open Publication is No. 2008-301044 (which will hereinafter simply referred to as the "preceding application"), of visualizing the information (document data) to be printed on the paper medium as an image data executing previously an encryption (scramble) process especially about an area to be concealed in a mode where it is decrypted only with a key (password) known by only the addressee of the information, and printing the information in a way that gets the original content unrecognizable visually. According to this method, the valid addressee of the information electronizes the data by reading the information printed on the paper medium with a scanner into a computer, extracting only the area undergoing the encryption (scramble) process, then decrypting the original partial image by employing the key (password), inserting the partial image in an original cut-out position of the electronic data, and then enabling the whole original image (i.e., the visualized document data to be restored).

According to such a method of the preceding application, even the information containing the encrypted area printed on the paper medium is seen by the third party, the third party is unable to recognize the content of a meaning of the encrypted area, whereby the information can be prevented from being leaked out.

Note that the method, proposed in the preceding application, of executing the encryption (scramble) process about only the part of the image can be applied to not only the image printed on the paper medium but also the encryption of the visualized document data circulated as the electronic data.

On the other hand, as a method of encrypting a part of the document data without being visualized, other than the method of the preceding application, there exists a method of specifying a partial area as a masked area in structured document data such as PDF (Portable Document Format) and displaying the document data in a way that superposes a color like black over the specified area. This method involves using a scheme of deleting the information of the masked area and inserting the black-dotted image in the information-deleted area in order to prevent the masked area in the distributed document from being read by the third party. This scheme intends to disable even a document creator himself or herself from acquiring the deleted information from the masked area in the document.

Taking what has been described above into consideration, the existing document data circulated as the electronic document is classified into the electronic document data generated by an electronic document creating tool and the visualized data of the electronic document data. Further, the document data is defined as a high-order concept including the image data. Connotation of the [document data] embraces the document data and the image data printed on the paper medium in addition to the document data and the image data circulated by way of the electronic data.
[Patent document 1] Japanese Patent Laid-Open Publication No.2007-194962
[Patent document 2] Japanese Patent Laid-Open Publication No.2000-69300

The method of visually encrypting a whole or a part of the document data includes the method of executing the encryption (scramble) process about the whole or the part of the visualized document data, or a method of executing the black-dotting process over a partial area of the document data, then simultaneously deleting the area concealed with the masked area from the document data, and storing the encrypted data in an invisible area such as a header area of the document.

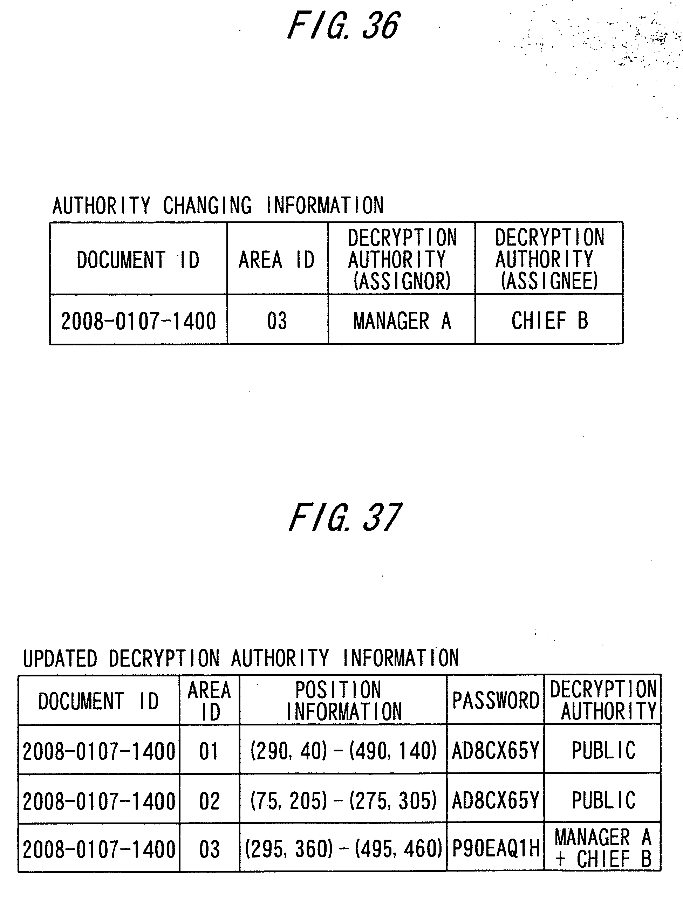

Even by use of any methods, however, the encrypted area can not be decrypted unless using a key known by only the addressee presumed at a point of time of the encryption, so that even in a case where there arises a necessity for assigning decryption authority to a person (who will hereinafter be called a "proxy") other than the addressee after transmitting the information toward the addressee, the proxy can not decrypt the document data on the basis of the already-transmitted document data itself. This will be discussed with reference to FIG. 37. Note that an example illustrated in FIG. 37 is an example of encrypting and decrypting a part of the document data by employing a key (common key) common to the encryption and the decryption.

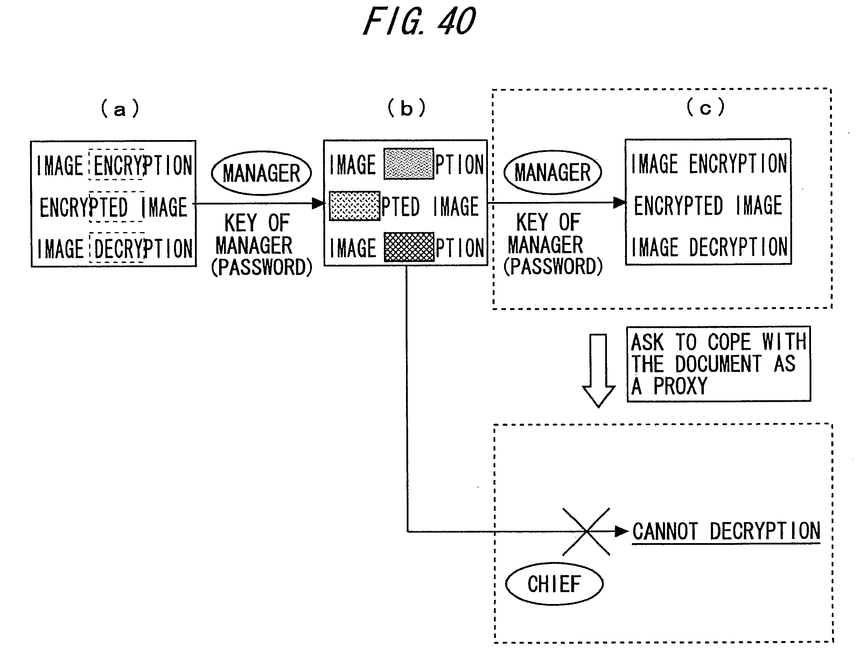

In an example depicted in FIG. 40, however, initially a "manager" is assumed to be the addressee of the document data (a), and hence the document data is encrypted with a key (password) assigned to and known by only the "manager" , which is, however, usable by an encrypting device used by a document data sender (b). Accordingly, the "manager", can decrypt the document data by use of the self-key (password) (c). In this respect, it is assumed that the "manager" requests a "section chief" as a proxy to deal with the printed document or the electronic document having the document data because of circumstances that do not permit the "manager" himself or herself to perform the decryption. In this case, however, the "section chief" does not hold the key (password) for decrypting the document data and can not therefore decrypt the document data. Note that the "section chief" is abbreviated to "CHIEF" in the figures.

In this case, on the occasion of the request, simply if the "manager" lets the "section chief" know the self-key (password) orally or by a written memorandum, the "section chief" can decrypt the document data. It should not, however, be recommended to let other people know the self-key in terms of causing many problems in security.

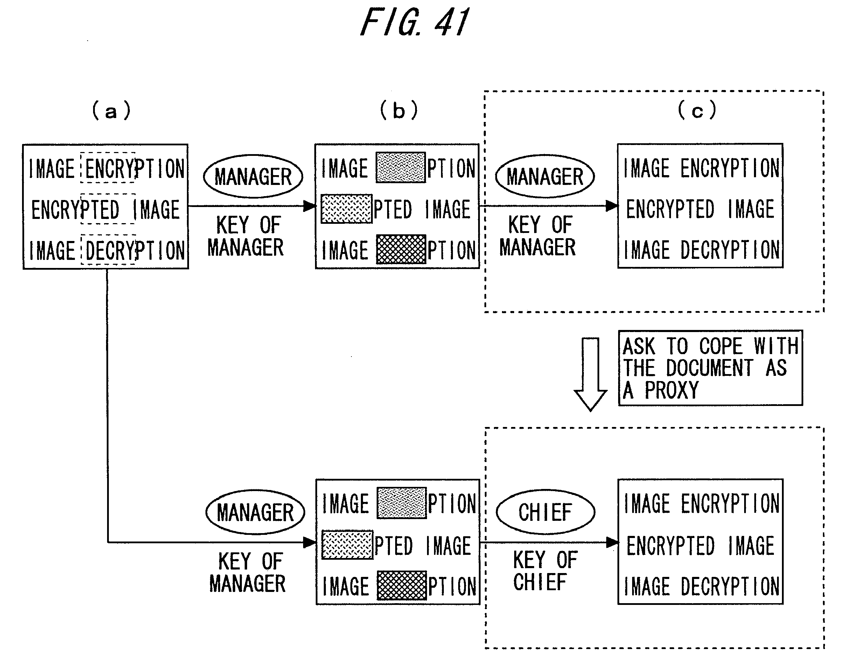

Such being the case, a method of enabling the "section chief" to decrypt the document data without letting the "section chief" know the key of the "manager" that is used for encrypting the document data is, it is considered, exemplified by, as depicted in FIG. 41, a method of re-issuing the encrypted document data by encrypting the original document data with the key (password) assigned to and known by only the "section chief" (which is, however, usable by the encrypting device used by the sender of the document data) separately from the document data encrypted with the key of the "manager", conveying this re-issued encrypted document data and enabling the "section chief" to decrypt the encrypted document data with the self-key (password). This method must, however, involve performing again the operation of encrypting the same area, which is time-consuming. Moreover, if the issuer of the document data is not the "manager" himself or herself, the "manager" requesting the "section chief" to become the proxy must request the issuer of the document data to re-issue the encrypted document data, which is further time-consuming. In this case, if the issuer gets a delay to deal with the operation, meanwhile the "manager" can not request the "section chief" to deal with the printed document or the electronic document, and hence the issuer is burdened with a responsibility of quickly responding to the request for re-issuing the encrypted document data, however, such occurrence of the responsibility becomes a restraint in terms of the system operation, which is not desirable.

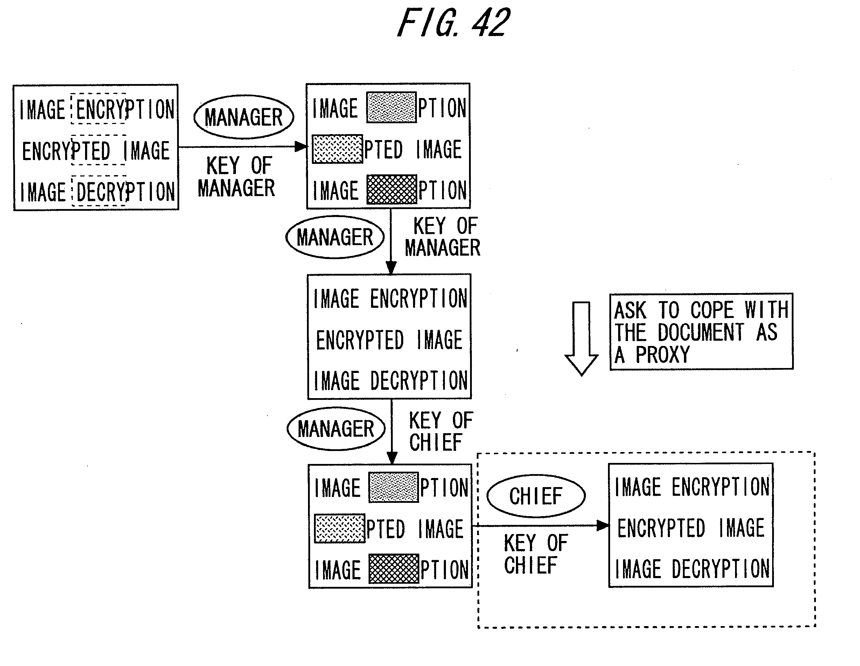

Moreover, it is considered that another method of enabling the "section chief" to decrypt the document data without letting the "section chief" know the key of the "manager" that is used for encrypting the document data, as illustrated in FIG. 42, in which, after the "manager" himself or herself has once decrypted the encrypted document data with the self-key (password), the document data encrypted with the key of the "section chief" or a key causing no trouble even if letting the "section chief" know, then outputting the re-encrypted document data, conveying the re-encrypted document data to the "section chief", and enabling the "section chief" to decrypt the re-encrypted document data with the self-key (password). This method, however, entails re-encrypting the data after the encrypted area has once been decrypted and is therefore time-consuming. Further, when the encrypted document data is a printed material, the data needs reading with a scanner into a computer, which is further time-consuming and is not also preferable in terms of a decline of quality of the encrypted document data.

Accordingly, it is an object in one aspect of the embodiment to provide a document data encryption method which can eliminate, in the case of letting a proxy other than an initial addressee of the encrypted document data decrypt the encrypted document data, a necessity for informing the proxy of a key known by only the addressee and a necessity for re-encrypting the document data.

### SUMMARY

According to an aspect of the embodiment, a document data encryption method of encrypting document data thatis to be conveyed to an addressee in a mode where it is decrypted with a key for the addressee, and decrypting the document data by use of the key, includes making a first terminal encrypt the key for the addressee in a mode where it is decrypted with a key for a proxy to whom the document data is transferred, and transmit the encrypted key for the addressee to the proxy, and making a second terminal, operated by the proxy, decrypt the key for the addressee by employing the key for the proxy, and decrypt the document data by use of the decrypted key for the addressee.

The object and advantages of the embodiment will be realized and attained by means of the elements and combinations particularly pointed out in the claims.

It is to be understood that both the foregoing general description and the following detailed description are exemplary and explanatory and are not restrictive of the embodiment, as claimed.

### BRIEF DESCRIPTION OF THE DRAWINGS

FIG. 1 is a block diagram illustrating an outline of a configuration of a document data encryption system according to a first embodiment.
FIG. 2 is a block diagram illustrating a correlation between functions of an encrypting device according to the first embodiment.
FIG. 3 is a block diagram illustrating a correlation between functions of a decryption authority changing device according to the first embodiment.
FIG. 4 is a block diagram illustrating a correlation between functions of a decrypting device according to the first embodiment.
FIG. 5 is a flowchart illustrating a process executed in the encrypting device according to the first embodiment.
FIG. 6 is a flowchart illustrating a process executed in the decryption authority changing device according to the first embodiment.
FIG. 7 is a flowchart illustrating a process executed in the decrypting device according to the first embodiment.
FIG. 8 is a diagram illustrating an example of how document data is encrypted and decrypted.
FIG. 9 is a diagram illustrating an example of encrypted document data.
FIG. 10 is a table illustrating decryption authority information according to the first embodiment.
FIG. 11 is a diagram depicting a GUI screen for inputting a document ID.
FIG. 12 is a diagram depicting a GUI screen for inputting an area ID.
FIG. 13 is a diagram depicting a GUI screen for inputting a password.
FIG. 14 is a diagram depicting a GUI screen for inputting a name (ID) of a decipherer.
FIG. 15 is a table illustrating a data structure of authority changing information according to the first embodiment.
FIG. 16 is an explanatory diagram of an operation of a document data encryption system according to the first embodiment.

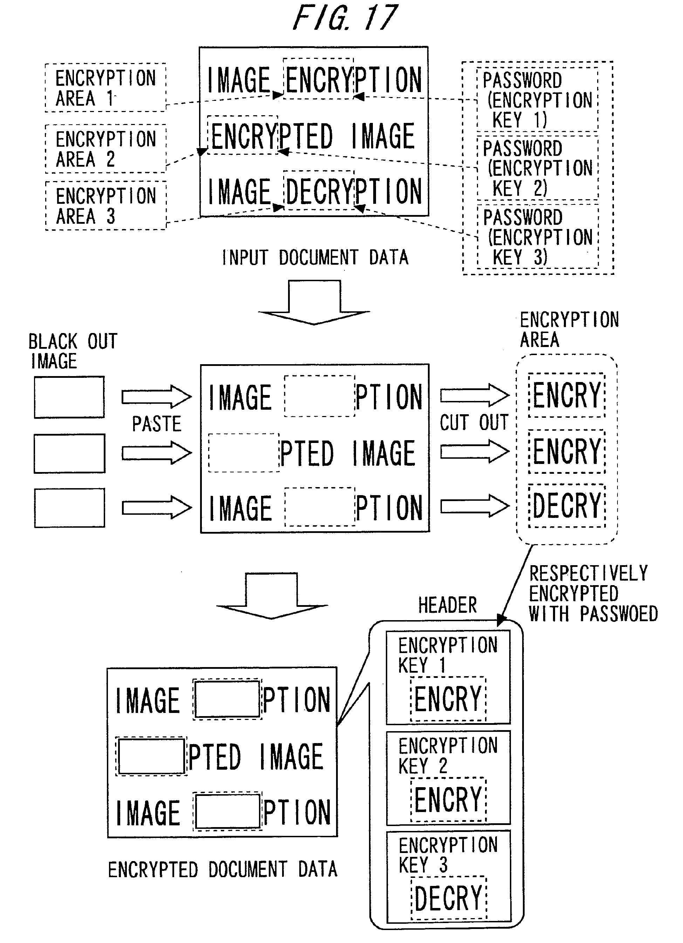

FIG. 17 is a diagram illustrating the encryption in a first modified example of the first embodiment.
FIG. 18 is a diagram illustrating how the authority is assigned in the first modified example of the first embodiment.
FIG. 19 is a diagram illustrating the decryption in the first modified example of the first embodiment.
FIG. 20 is a diagram illustrating a modified example of the encrypted document data.
FIG. 21 is a diagram illustrating of how distortion is corrected in a second modified example of the first embodiment.
FIG. 22 is a diagram illustrating how the area is specified in the second modified example of the first embodiment.
FIG. 23 is a diagram illustrating authority changing information in the second modified example of the first embodiment.
FIG. 24 is a diagram illustrating how the area is specified in a third modified example of the first embodiment.
FIG. 25 is a diagram illustrating of how a password is inputted in the third modified example of the first embodiment.
FIG. 26 is a diagram illustrating of how a name (ID) of the decipherer is inputted in the third modified example of the first embodiment.
FIG. 27 is a block diagram illustrating an outline of a configuration of the document data encryption system according to a second embodiment.
FIG. 28 is a block diagram illustrating a correlation between functions of the encrypting device according to the second embodiment.
FIG. 29 is a block diagram illustrating a correlation between functions of the decryption authority changing device according to the second embodiment.
FIG. 30 is a block diagram illustrating a correlation between functions of the decryption authority managing device according to the second embodiment.
FIG. 31 is a block diagram illustrating a correlation between functions of the decrypting device according to the second embodiment.
FIG. 32 is a flowchart illustrating a process executed in the encrypting device according to the second embodiment.
FIG. 33 is a flowchart illustrating a process executed in the decryption authority changing device according to the second embodiment.
FIG. 34 is a flowchart illustrating a process executed in the decryption authority managing device according to the second embodiment.
FIG. 35 is a flowchart illustrating a process executed in the decrypting device according to the second embodiment.
FIG. 36 is a table illustrating the authority changing information according to the second embodiment.
FIG. 37 is a table illustrating the updated decryption authority information.
FIG. 38 is an explanatory diagram of an operation of the document data encryption system according to the second embodiment.
FIG. 39 is an explanatory diagram of an operation of the document data encryption system according to the second embodiment.
FIG. 40 is an explanatory diagram of a problem of a preceding document data encryption method.
FIG. 41 is an explanatory diagram of a problem of a preceding document data encryption method.
FIG. 42 is an explanatory diagram of a problem of a preceding document data encryption method.

### DESCRIPTION OF EMBODIMENTS

Two embodiments of the present invention will hereinafter be described based on the drawings. Each of the embodiments is characterized in that a key (password) of an original addressee, which is used for encryption of encrypted document data, is encrypted with a key (password) of a proxy defined as a consignee, the encrypted key is sent as authority change information to a computer (decrypting device) of the proxy, the decrypting device decrypts the key (password) of the addressee in the authority change information in a mode it is unrecognizable from outside, and the encrypted document data is decrypted by use of the thus-decrypted key (password) of the addressee. Note that the "key (password) of the addressee" may be a common key known by only the addressee and the sender and may also be a public key corresponding to a secret key that is known by only the addressee. Further, the gist of putting parentheses to the "password" predicts the encryption using the encryption key generated by executing a predetermined arithmetic operation on the password. It is not, however, the essence of the present invention what encryption method is adopted, and hence in the following discussion, for simplifying the description, a story will proceed on the assumption that the encryption is made by use of the password of the addressee, which is to be simply termed the as "password of the addressee". Similarly, the "key (password) of the proxy" may be a common key known by only the proxy and the addressee and may also be a public key corresponding to a secret key that is known by only the proxy. Further, the gist of putting parentheses to the password predicts the encryption using the encryption key generated by executing a predetermined arithmetic operation on the password. It is not, however, the essence of the present invention what encryption method is adopted, and therefore in the following discussion, for simplifying the description, a story will proceed on the assumption that the encryption is made by use of the password of the proxy, which is to be simply termed as "password".

### FIRST EMBODIMENT

A first embodiment is characterized such that the authority change information is generated by a function of a single terminal (authority changing device) possessed and operated by the original addressee of the encrypted document data.

### <System Architecture>

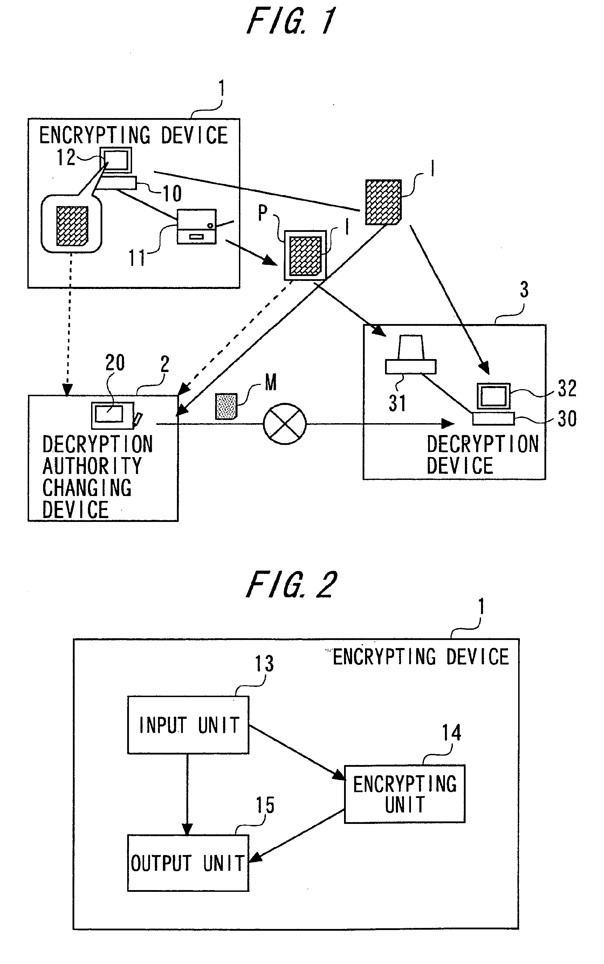

FIG. 1 is a block diagram schematically illustrating a correlation between respective devices building up a document data encryption system according to the first embodiment such as this. To be specific, the document data encryption system according to the first embodiment is configured by an encrypting device 1, an authority changing device 2 and a decrypting device 3. Then, the encrypting device 1 can transmit, via an unillustratednetwork, an e-mail to the authority changing device 2 and the decrypting device 3, while the authority changing device 2 can transmit data to the decrypting device 3 via an unillustrated communication network or infrared-ray communications.

### [Encrypting Device]

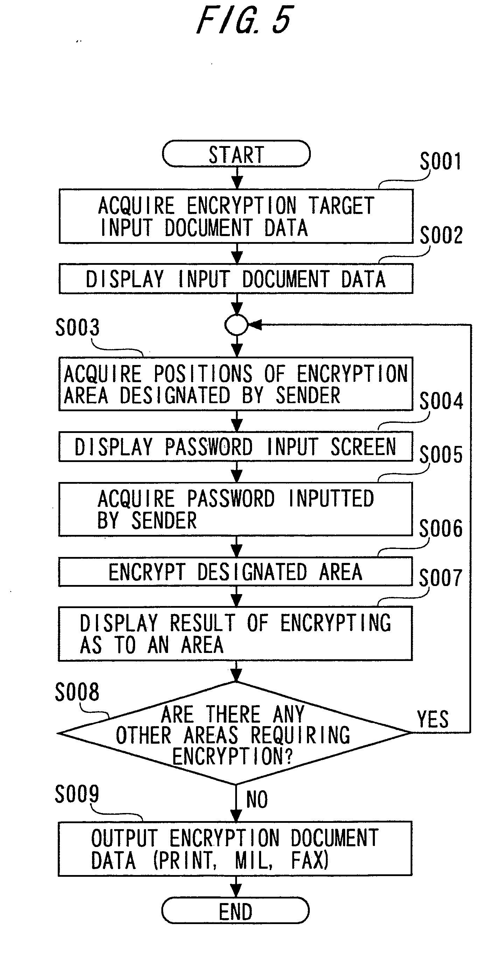

The encrypting device 1 is a computer system which, in the same way as in the description of the preceding application, encrypts a part or whole of transmission target document data by use of a password of an original addressee, displays the post-encryption transmission target document data (which will hereinafter be referred to as [encrypted document data]) on a display 12, transmits the encrypted document data attached to an e-mail to a destination specified by a mail address, faxes the encrypted document data to a FAX number of the addressee according to a FAX protocol, and prints and outputs the encrypted document data as a printed material P by a printer. The encrypting device 1 is constructed of a personal computer (PC) 10 having a general configuration including the display 12, a CPU (unillustrated), a keyboard (unillustrated), a mouse (unillustrated), a scanner (unillustrated), a disk device (unillustrated) and a communication interface, and an encryption program making the CPU execute processes of a processing flow illustrated in FIG. 5 installed in the disc device, and of a printer 11 connected to the PC 10.

FIG. 2 is a block diagram illustrating functions executed by the CPU when executing the encryption program described above in the encrypting device 1 explained above. To be specific, as illustrated in FIG. 2, the functions of the encrypting device 1 are configured by an input unit 13, an encrypting unit 14 and an output unit 15.

The input unit 13 acquires the document data (original document data) inputted via a disk device, a camera, a scanner, etc that are not illustrated, then acquires information for specifying a position of an encryption area that is inputted via the mouse and the keyboard, and acquires a password for encrypting each encryption area inputted via the keyboard. The input unit 13 notifies the encrypting unit 14 of the thus-acquired original document data, the position of the encryption area and the password for each area, and notifies the output unit 15 of the original document data that should be referred to when an operator inputs the position specifying information of the encryption area, whereby the original document data is displayed on the display 12.

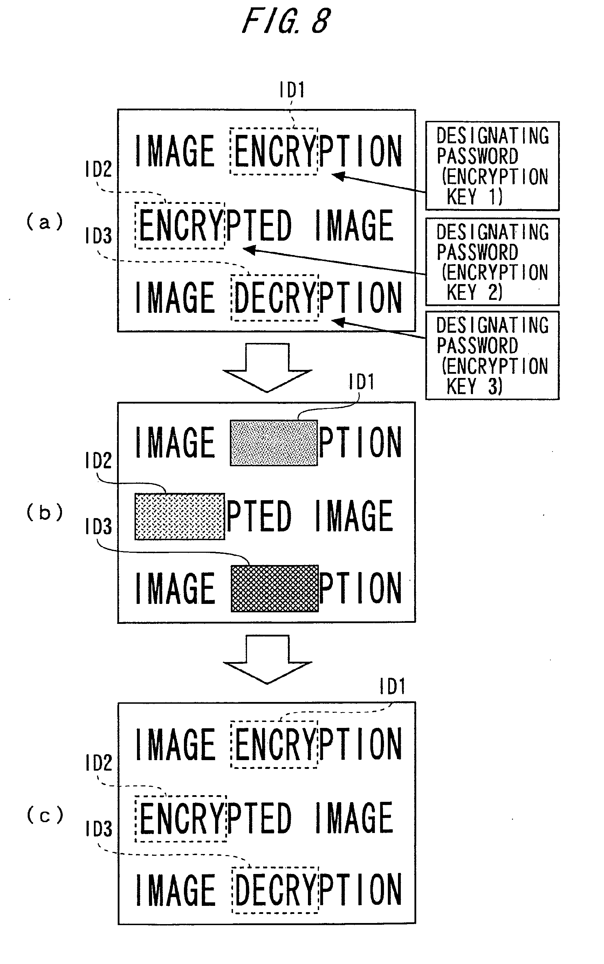

The encrypting unit 14 acquires the original document data which the input unit 13 notifies of, and encrypts the encryption area specified by the position of which the input unit 13 notifies in the original document data by use of the password of which the input unit 13 notifies. For example, as illustrated in FIG. 8(a), when assuming that three encryption areas (ID1 - ID3) are designated in the original document data, a password (encryption key 1) is designated in the first encryption area (ID1), a password (encryption key 2) is designated in the second encryption area (ID2), and a password (encryption key 3) is designated in the third encryption area (ID3), as illustrated in FIG. 8(b), it follows that the respective encryption areas (ID1 - ID3) are encrypted with the passwords (encryption keys 1 - 3). Note that the respective encryption areas (ID1 - ID3) are uniquely determined according to the sequence of raster scanning for the original document data. The encrypting unit 14 notifies the output unit 15 of the document data (encrypted document data I) with the respective encryption areas being encrypted.

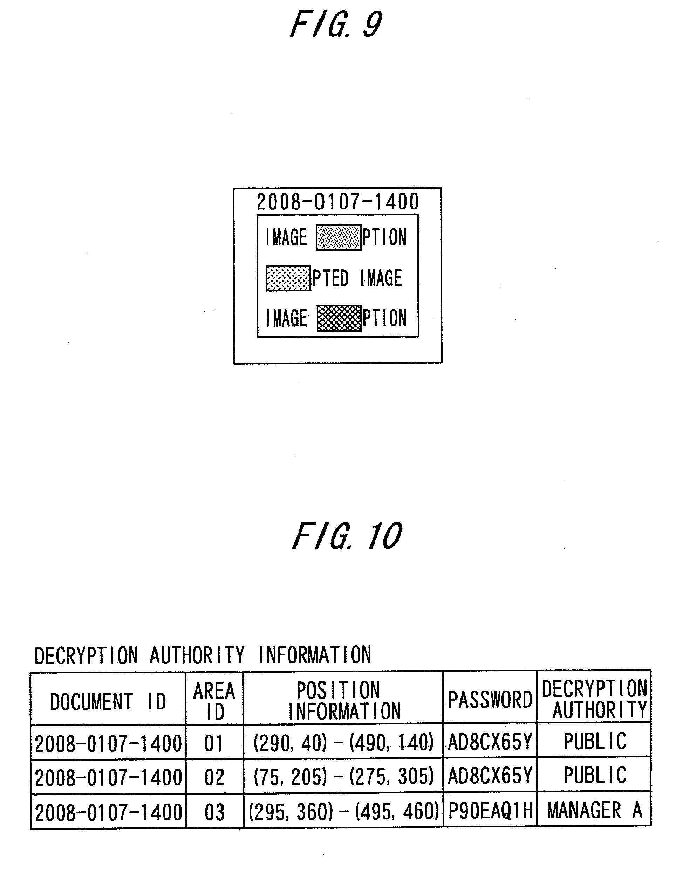

The output unit 15 displays the original document data of which the input unit 13 notifies and the encrypted document data I of which the encrypting unit 14 has informed on the display 12, and gets the printer 11 to output the printed material P into which the encrypted document data I is printed on a sheet of output paper in accordance with operator' s selection inputted to the input unit 13, or transmits the encrypted document data I by e-mail or through FAX signals to the address of the addressee or the address of the proxy designated by the addressee. Note that an identification number (document ID) of the encrypted document data I and the area ID of each encryption area are stored in a header of the document data of the encrypted document data I transmitted by e-mail. Further, the document ID of the encrypted document data is printed in plaintext in the header position on the printed material P output from the printer 11 (see FIG. 9).

### [Decryption Authority Changing Device]

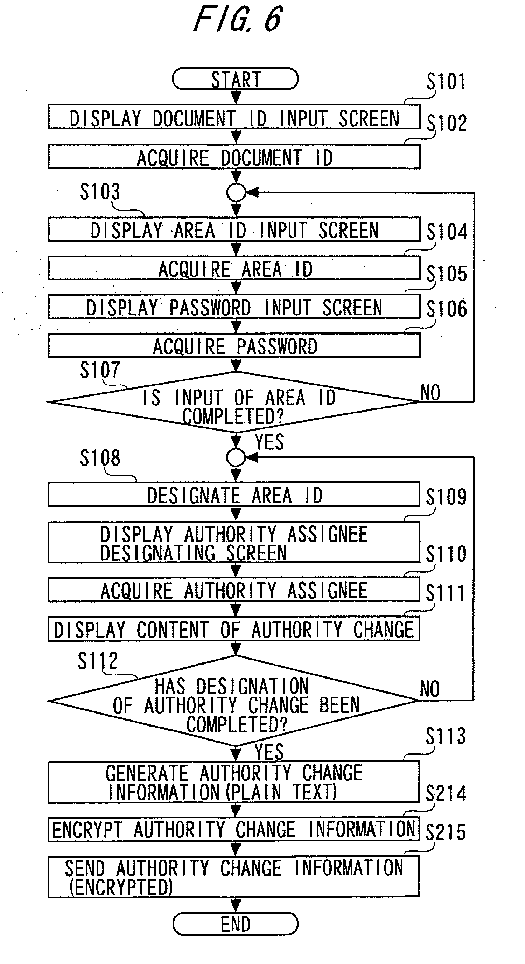

Next, a decryption authority changing device 2 is a communication terminal of which operating authority is held by the addressee, generates authority changing information M assembled from items of information such as the ID (document ID) of the encrypted document data I inputted by the addressee, the area ID for specifying the encrypted area or position information (coordinates) and the password of the addressee, at least the password among these items of information being encrypted with the password of the proxy, and transmits the authority changing information M. The decryption authority changing device 2 is constructed of, though not illustrated, a CPU capable of executing the applications, a keyboard including ten keys, a memory stored with the applications, a display 20 for displaying a GUI (Graphical User Interface) screen, a camera and a communication device. Specifically, the decryption authority changing device 2 is exemplified by a mobile phone such as a so-called smart phone, a PDA (Personal Digital Assistant) and a personal computer. Note that the communication device included in the decryption authority changing device 2 may be a communication module connectable to a mobile phone network and may also be an infrared-ray communication module as well as being a communication module connectable to a fixed telephone network and a LAN (Local Area Network). Namely, the communication function required of the decryption authority changing device 2 may be a function of performing the data communications via a communication line and may also be a function of performing the infrared-ray communications. In the first embodiment, a decryption authority changing program, of which a processing flow is illustrated in FIG. 6, is installed as the application into an unillustrated memory of the decryption authority changing device 2.

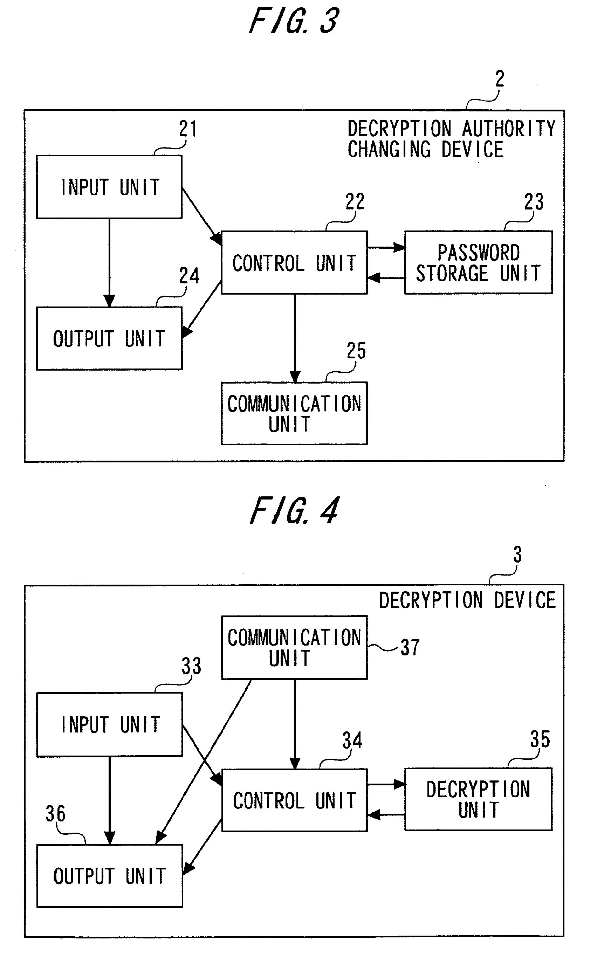

FIG. 3 is a block diagram illustrating functions realized by the CPU in such a case that the unillustrated CPU executes the decryption authority changing program in the decryption authority changing device 2 described above. To be specific, as illustrated in FIG. 3, the functions of the decryption authority changing device 2 are configured by an input unit 21, a control unit 22, a password storage unit 23, an output unit 24 and a communication unit 15.

The input unit 21 acquires the document ID inputted via the keyboard, the area ID of each encrypted area or the position specifying information and the selection information (authority handover destination) of the proxy about each encrypted area, then acquires the password of the addressee that is used for encrypting each encrypted area inputted through the keyboard and the password of the each individual proxy for encrypting the password of the addressee, further acquires the encrypted document data I inputted via the camera or the scanner which captures the image of the printed material P, or acquires the encrypted document data I from the e-mail addressed to the addressee, which is received via the communication device. Note that an individual may be assigned as the proxy, and a specified group including this individual may also be assigned as the proxy, in latter case a password allocated to this group is acquired. This scheme enables a difference to be given to access authority of the proxy, corresponding to a level of confidentiality of each encrypted area. Then, the input unit 21 notifies the control unit 22 of the thus-acquired document ID, each area ID, the password of the addressee that corresponds to each encrypted area and the authority handover destination. Further, the input unit 21 notifies the output unit 24 of the encrypted document data I that should be referred to when the operator inputs the position specifying information of the encrypted area, and displays the encrypted document data I on the display 20.

The password storage unit 23 stores the identifying information and the password in a way that these items of information are associated with each other for every subject (the addressee having the operating authority of the decryption authority changing device 2, the proxy as the individual, the group of the proxy) in the memory. The password dealt with by the password storage unit 23 involves using, it is preferable, the public key of each proxy.

The control unit 22 generates the authority changing information M assembled from the addressee password of which the input unit 21 notifies and the authority handover destination of which the input unit 21 notifies for every tuple of the document ID of which the input unit 21 notifies, the individual area ID of which the input unit 21 notifies and the position specifying information of the encrypted area, further encrypts at least the addressee password in the authority changing information M by employing the proxy password which the input unit 21 notifies of or the proxy password stored in the password storage unit 23 in the way of being associated with the authority handover destination which the input unit 21 notifies of. Then, the control unit 22 informs the output unit 24 of the pre-encrypting authority changing information M, and informs the communication unit 25 of the post-encrypting authority changing information M.

The output unit 24 displays, for confirmation, the encrypted document data I of which the input unit 21 notifies and the pre-encrypting authority changing information M of which the control unit 22 notifies on the display 20.

The communication unit 25 transmits the post-encrypting authority changing information M of which the control unit 22 notifies to the decrypting device 3 of each individual proxy (authority handover destination) via the communication line or through the infrared-ray communications.

Note that the addressee may, if the encrypted document data I is transmitted by e-mail to the addressee, after the decryption authority changing device 2 has received the e-mail, transfer the e-mail to the proxy and may also transfer the e-mail by use of the different terminal (the decrypting device etc of which operating authority is held by the addressee himself or herself).

### [Decrypting Device]

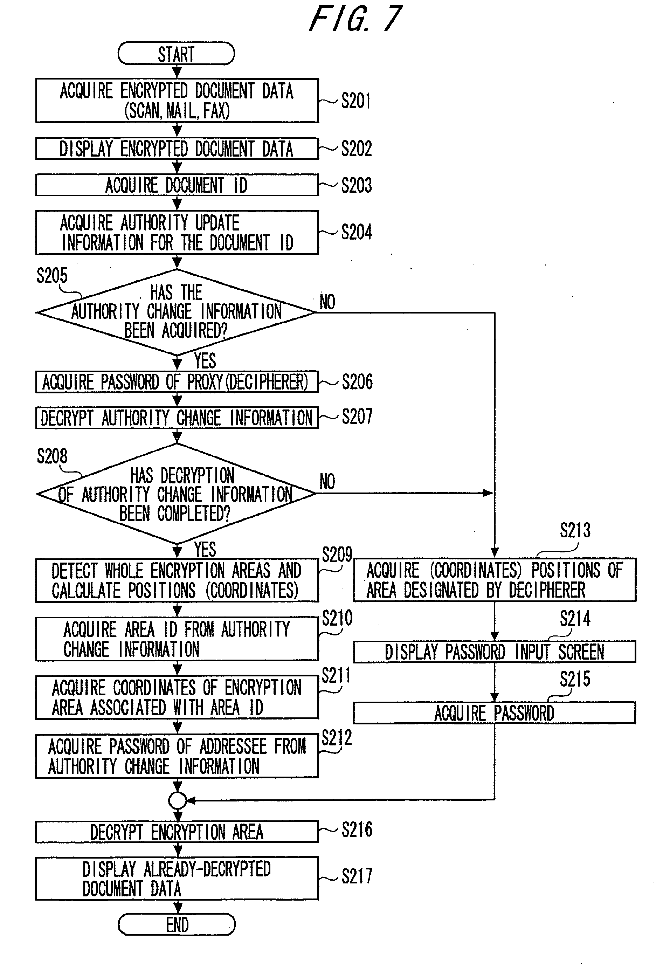

Next, the decrypting device 3, which is a computer system operated by the proxy, is constructed of a personal computer (PC) 30 having a general configuration including a display 32, a CPU (unillustrated), a disk device (unillustrated) and a communication interface, and a decryption program for making the CPU execute processes in a processing flow illustrated in FIG. 7 installed in the disc device and a scanner 31 connected to the PC 30. The decrypting device 3, based on the decryption program, extracts the encrypted document data I from the e-mail or the FAX signals that are received directly from the encrypting device 1 or transferred by the addressee, or reads the encrypted document data I on the printed material P handed over or sent from the addressee by the scanner 31 on one hand, then decrypts the password in the authority changing information M received from the authority changing device 2 with the secret password of the proxy, and further decrypts the encrypted area in the encrypted document data I by employing the decrypted password, thereby restoring the original document data.

FIG. 4 is a block diagram illustrating functions realized by the CPU when the unillustrated CPU executes the decryption program described above in the decrypting device 3 explained above. Specifically, as illustrated in FIG. 4, the functions of the decrypting device 3 are configured by an input unit 33, a control unit 34, a decrypting unit 35, an output unit 36 and a communication unit 37.

The input unit 33 acquires the encrypted document data I on the printed material P that is inputted via the scanner 31, then acquires the area ID of the encrypted area or the position specifying information which are inputted via the mouse and the keyboard, and acquires the password (password of the group) of the proxy having the operating authority of the decrypting device 3 which is inputted through the keyboard. Then, the input unit 33 notifies the control unit 34 of the thus-acquired encrypted document data I, the area ID associated with each encrypted area or the position specifying information and the password. Moreover, the input unit 33 notifies the output unit 36 of the encrypted document data I that should be referred to by the operator when inputting the position specifying information of the encrypted area, and displays the encrypted document data I on the display 32.

The communication unit 37 acquires the encrypted document data I in the e-mail or the FAX signals received via the communication interface, and acquires the authority changing information M received through the communication interface. Then, the communication unit 37 notifies the control unit 34 of the thus-acquired encrypted document data I, the authority changing information M and the password. Moreover, the communication unit 37 notifies the output unit 36 of the encrypted document data I that should be referred to by the operator when inputting the position specifying information of the encrypted area, and displays the encrypted document data I on the display 32.

The control unit 34 decrypts, in the respective pieces of authority changing information M of which the input unit 33 notifies, the authority changing information M associated with the area ID of the encrypted area or the position specifying information of which the input unit 33 notifies by use of the password of which the input unit 33 notifies, corresponding to the authority handover destination in the authority changing information M. Then, the control unit 34 extracts the addressee password from the decrypted authority changing information M, then notifies the decrypting unit 35 of the addressee password together with the area ID of the encrypted area or the position specifying information and the encrypted document data I of which the input unit 33 notifies, and requests the decrypting unit 35 to decrypt the encrypted area. Then, when receiving the document data (already-decrypted document data) with completion of decryptions of all of the decryption-enabled encrypted areas from the decrypting unit 35, the control unit 34 notifies the output unit 36 of the already-decrypted document data.

The decrypting unit 35 decrypts every encrypted area identified by the area ID or the position specifying information received from the control unit 34 in the encrypted document data I received from the control unit 34 by employing the password received from the control unit 34, thus decrypts the encrypted document data I to such a limit that the proxy having the operating authority of the decrypting device 3 can conduct the decryption, and sends a decrypted result as the already-decrypted document data by way of a response to the control unit 34. For example, in the above-illustrated example in FIG. 8, the respective encrypted areas (ID1 - ID3) of the encrypted document data illustrated in FIG. FIG. 8 (b) are decrypted with the associated passwords, thereby obtaining the already-decrypted document data as illustrated in FIG. 8(c).

The output unit 36 displays the encrypted document data I of which the input unit 33 or the communication unit 37 notifies and the already-decrypted document data of which the control unit 34 notifies on the display 32.

### <Data Processing Flow>

A data processing flow by the encrypting device 1, the authority changing device 2 and the decoding device 3 building up the document data encryption system according to the first embodiment having the configuration described above, will hereinafter be described with reference to flowcharts in FIGS. 5 through 7.

### [Encrypting Device]

FIG. 5 is the flowchart showing the encrypting process executed by the CPU according to the encrypting program installed into the disk device of the encrypting device 1. A start of the process in this flowchart is triggered by inputting a predetermined command for reading the original document data to the keyboard. In first step S001 after starting the encrypting process, the encrypting device 1 (the input unit 13 and the encrypting unit 14) acquires the encryption target input document data (original document data) in the way described above.

In next step S002, the encrypting device 1 (the output unit 15) displays the original document data acquired in S001 on the display 12.

Next, a loop process of S003 through S008 is executed in order to carry out the encrypting process about the area of which confidentiality is desired by a sender of the document data. In first step S003 after entering this loop process, the encrypting device 1 (the encrypting unit 14) acquires one of unprocessed pieces of position specifying information about the encrypted areas, which are inputted through operating the keyboard or the mouse.

In next step S004, the encrypting device 1 (the encrypting unit 14) displays, on the display 12, a GUI screen (password input screen) for accepting an input of the password of the address of the input document data. Note that the password used for the respective encrypted areas may be common, however, for example, in the case of distributing the same encrypted document data to a plurality of persons, the data may be encrypted by use of the passwords each different for every encrypted area, whereby a difference can be given to a range of the person having the authority for decrypting each encrypted area. For instance, an example in FIG. 10 is that a password of groups "Public" including "manager A" is applied to the area (ID1) and the area (ID2), and hence, the "manager A" and members of other groups "Public", who know the password, can decrypt these areas (ID1, ID2). A password of the "manager A" is applied to the area (ID3), and therefore the "manager A" can decrypt the area (ID3), however, other persons can not decrypt the area (ID3). Further, if there exists a plurality of passwords used between the sender and the addressee, these plural passwords are previously used separately for the respective areas in the way that the decryption authorities are associated with each other, which enables the decipherable ranges of the encrypted areas to be differentiated for every proxy even when requesting the proxy to act as a proxy for the decryption.

In next step S005, the encrypting device 1 (the encrypting unit 14) acquires the password inputted through operating the keyboard on the password input screen shown in S004.

In next step S006, the encrypting device 1 (the encrypting unit 14) encrypts the area specified by the specifying information acquired in S003 in the original document data obtained in S001 by use of the password acquired in S005.

In next step S007, the encrypting device 1 (the encrypting unit 14) overwrites the document data containing the encrypted result of each encrypted area with the completion of the encrypting process up to that point of time over the original document data shown in S002, and displays the overwritten document data.

In subsequent step S008, the encrypting device 1 (the encrypting unit 14) checks whether there exists the position specifying information of the unprocessed encrypted area or whether the sender inputs, via the keyboard, a purport (event) that the process about encrypted area terminates. Then, if there exists the position specifying information of the unprocessed encrypted area, the encrypting device 1 (the encrypting unit 14) loops back the process to S003 in order to execute the encrypting process about the unprocessed encrypted area.

Whereas if there is none of the position specifying information of the unprocessed encrypted area and when the sender inputs, via the keyboard, the purport that the process about all encrypted area terminates, the encrypting device 1 (the encrypting unit 14) advances the process to S009 on the assumption that the encrypting process about all of the encrypted areas is completed.

In S009, in accordance with a sender's instruction inputted via the keyboard, the encrypting device 1 (the encrypting unit 14) outputs the encrypted document data I, in which the encrypting process about all of the encrypted areas is completed, as the printed material P from the printer, or transmits the encrypted document data I to the address of the addressee in the way of being attached to the e-mail or in the way of being carried on the FAX signals. FIG. 9 shows an example of the thus-output encrypted document data I and the FAX signals, and, as described above, in the example of FIG. 9, the document ID of the plaintext is printed in the header position thereof.

Incidentally, as a result of completing the process so far, on the memory of the encrypting device 1, as illustrated in FIG. 10, decryption authority information registered as one record consisting of fields such as the document ID, the area ID (a serial number attached in the raster scanning sequence to the encrypted area of which the position is specified in S003), the decryption authority information containing the area position information (a coordinate range of the encrypted area that is position-specified in S003) the password and the decryption authority is generated for every tuple of the encrypted document data I and the encrypted area. The decryption authority information is not output to the outside when the encrypted document data I is output as the printed material P and the FAX signals, but is stored in the header of the document data when attached to the e-mail and thus output (which includes a case of temporarily saving the encrypted document data I in a document data file because of being attached to the e-mail).

Upon completion of S009, the encrypting device 1 finishes all the process thereof.

### [Decryption Authority Changing Device]

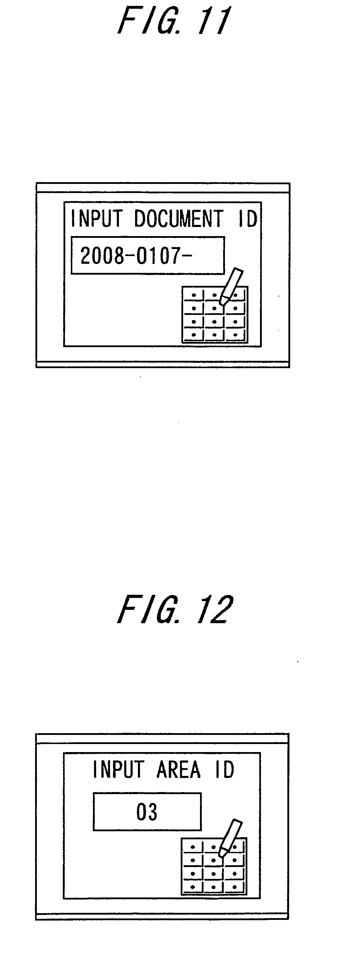

FIG. 6 is the flowchart showing the encrypting process executed by the CPU according to a decryption authority changing program installed into the memory of the decryption authority changing device 2. A start of the process based on this flowchart is triggered by inputting a predetermined command to the keyboard. In first step S101 after starting this encrypting process, the decryption authority changing device 2 (the output unit 24) displays a GUI screen (see FIG. 11) for accepting the input of the document ID. The addressee is requested to input the document ID printed in the header field of the printed material P into a text box.

In next step S102, the decryption authority changing device 2 (the input unit 21, the control unit 22) acquires the document ID inputted through operating the keyboard with respect to the GUI screen displayed in S101.

Subsequently, a loop process of S103 through S107 is executed for acquiring the password for each encrypted area of the encrypted document data I. In first step S103 after entering this loop process, the decryption authority changing device 2 (the output unit 24) displays a GUI screen (see FIG. 12) for accepting an input of the area ID on the display 20. The addressee is requested to specify the encrypted area that should be set as the processing target area from within the encrypted document data I, determines the order according to the raster scanning sequence of the encrypted areas in the encrypted document data I, and requests to input this order as a value of the area ID into the text box on the GUI screen.

In next step S104, the decryption authority changing device 2 (the input unit 21, the control unit 22) acquires the area ID inputted through operating the keyboard with respect to the GUI screen displayed in S103.

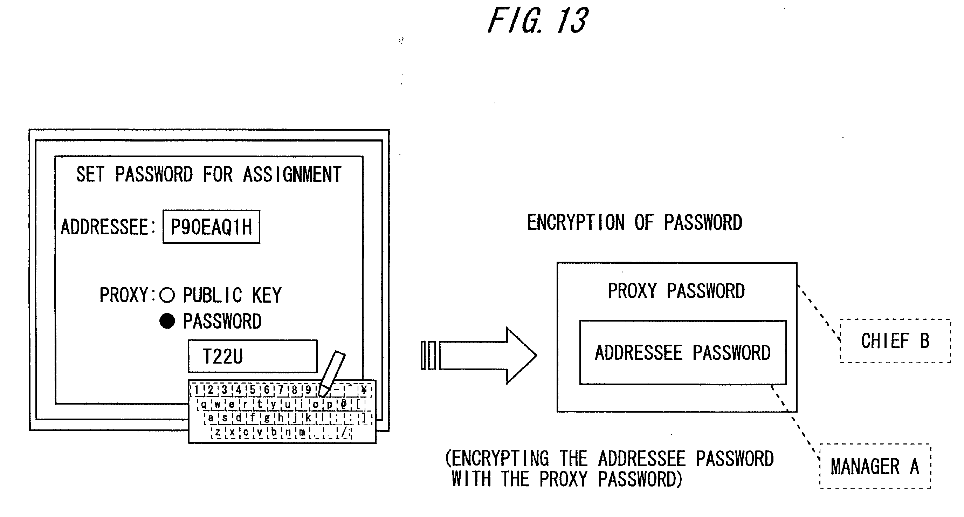

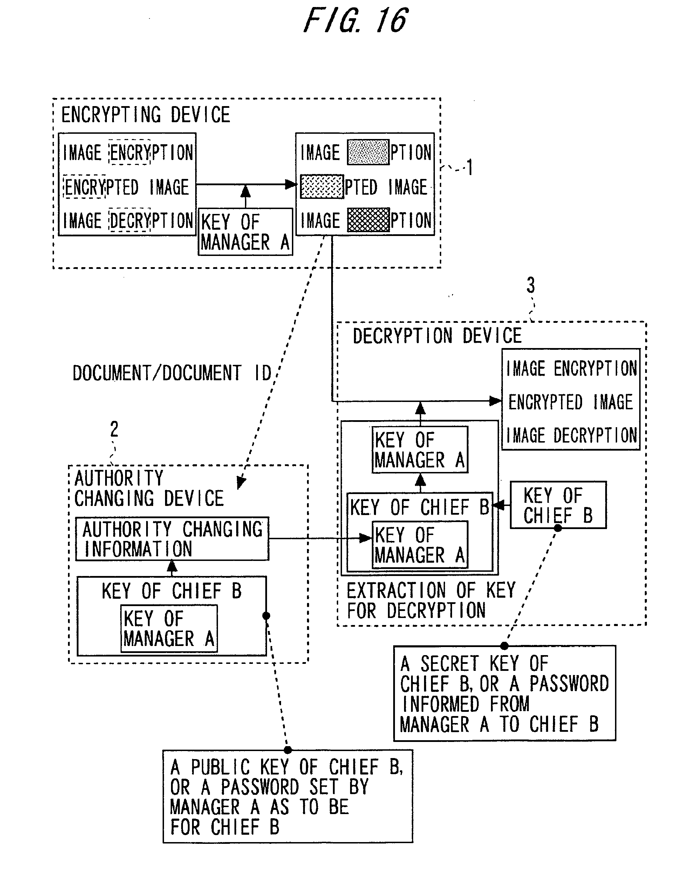

In subsequent step S105, the decryption authority changing device 2 (the output unit 24) displays, on the display 20, a GUI screen (see FIG. 13) for accepting the input of the addressee password associated with the area ID acquired in S104 and the input of the password of the proxy. Designation of the password of the proxy or designation of the public key can be selected on this GUI screen. In a case where the password of the proxy is inputted, the password of the proxy is used for encrypting the password of the addressee (see FIG. 16 and an "added drawing") in an authority changing information encrypting step (S114) which will be explained later on. Note that if the password of the proxy is directly designated, there arises a necessity for informing the proxy of the password. In the case of designating the public key about the proxy, there is no necessity for inputting the password of the proxy in this step.

In next step S106, the decryption authority changing device 2 (the input unit 21, the control unit 22) acquires each password inputted through operating the keyboard with respect to the GUI screen displayed in S105.

In next step S107, the decryption authority changing device 2 checks whether the sender inputs via the keyboard a purport that an unprocessed encrypted area still exists or a purport that processing for the encrypted areas terminates. Then, in the case of inputting the purport that an unprocessed encrypted area still exists, the decryption authority changing device 2 loops back the process to S103 in order to execute the loop process for the unprocessed encrypted area. By contrast, in the case of inputting the purport that processing for the encrypted areas terminates, the decryption authority changing device 2 advances the process to S108.

Subsequently, a loop process of S108 through S112 is executed in order to acquire the authority handover destination for each encrypted area of the encrypted document data I. In first step S108 after entering this loop process, the decryption authority changing device 2 (the input unit 21, the control unit 22) specifies one of the unprocessed area IDs acquired in S104.

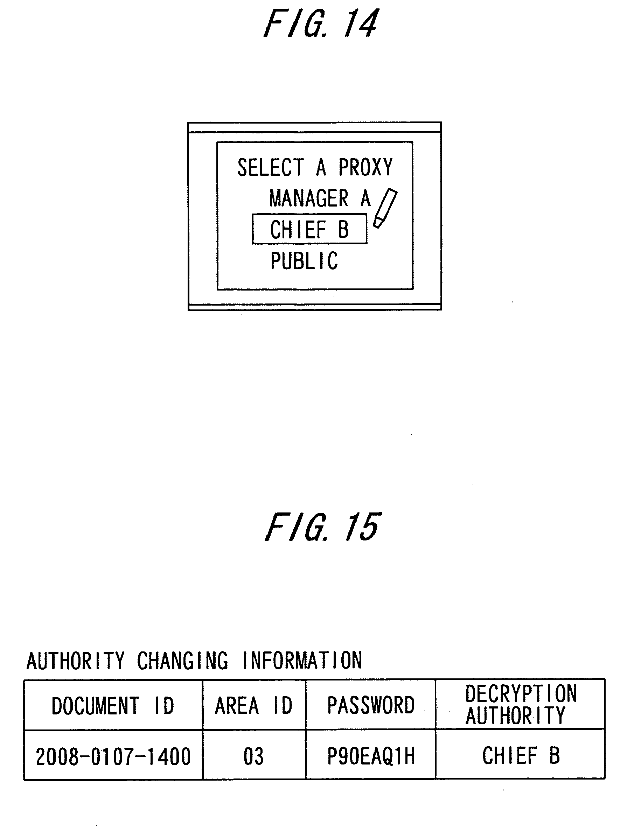

In next step S109, the decryption authority changing device 2 (the output unit 24) displays, on the display 20, a GUI screen (see FIG. 14) for accepting an input of the authority handover destination in order to acquire the authority handover destination with respect to the encrypted area identified by the area ID specified in S108. Names of the individual subjects stored in the password storage unit 23 are displayed as a list on the GUI screen. Note that the item category "Public" in FIG. 14 is a name of the group consisting of all of the members in a unit.

In next step S110, the decryption authority changing device 2 (the input unit 21, the control unit 22) acquires the authority handover destination (the proxy) selected through operating the keyboard with respect to the GUI screen displayed in S109. Note that if unable to acquire the password of the proxy in S106 with respect to the encrypted area identified by the area ID specified in S108, or if the use of the public key is selected, the decryption authority changing device 2 (the control unit 22) acquires the password (example: public key) stored in the password storage unit 23 in the way of being associated with the authority handover destination selected in this step.

In next step S111, the decryption authority changing device 2 (the output unit 24) displays, on the display 20, the authority changing content, i.e., the name of the authority handover destination obtained in S110 with respect to the area ID specified in S108.

In subsequent step S112, the decryption authority changing device 2 (the input unit 21, the control unit 22) checks in S108 whether the area IDs of all of the encrypted areas finish being specified or not. Then, if the area IDs of all of the encrypted areas have not yet finished to be specified, the decryption authority changing device 2 loops back the process to S108. Whereas if the area IDs of all of the encrypted areas have finished to be specified, the process proceeds to S113.

In S113, the decryption authority changing device 2 (the control unit 22) combines, for every area ID, the addressee password acquired in S106 or S110, the authority handover destination acquired in S110 and the document ID acquired in S102 in the way of being associated with the area ID, thereby generating the authority changing information M (plaintext) in a format illustrated in FIG. 15.

In next step S114, for every area ID, at least the addressee password in the authority changing information M generated in S113 in the way of being associated therewith is encrypted by use of the proxy password obtained in S106.

In subsequent step S115, the decryption authority changing device 2 (the communication unit 25) transmits all pieces of authority changing information M (encryption) completed in S114 to each authority handover destination via the communication interface. Upon completion of S115, the decryption authority changing device 2 terminates this authority changing process.

### [Decrypting Device]

FIG. 7 is the flowchart showing the decrypting process executed by the CPU according to a decrypting program installed into the disk device of the decrypting device 3. A start of the process based on this flowchart is triggered by inputting a predetermined command to the keyboard. In first step S201 after starting this decrypting process, the decrypting device 3 (the input unit 33 or the communication unit 37) acquires the decryption target encrypted document data I in the way described above.

In next step S202, the decrypting device 3 (the output unit 36) displays the encrypted document data I acquired in S201 on the display 32.

In next step S203, the decrypting device 3 (the control unit 34) acquires the document ID of the encrypted document data I that is acquired in S201. To be specific, the decrypting device 3 (the control unit 34), in the case of acquiring the encrypted document data I by e-mail, extracts the document ID from the decryption authority information stored in the header of the document data. In contrast with this, when acquiring the encrypted document data I by the scanner 31 and when acquiring the encrypted document data I by way of the FAX signals, the document ID is obtained through the same process as in S101 and S102 of FIG. 6.

In next step S204, the decrypting device 3 (the control unit 34) tries to acquire the authority changing information M containing the document ID acquired in S203 from within the pieces of authority changing information M received so far by the communication unit 37 from the decryption authority changing device 2 via the communication line or through the infrared-ray communications.

In next S205, the decrypting device 3 (the control unit 34) checks whether or not the authority changing information M can be acquired as a result of S204. Then, if unable to acquire the authority changing information M, there is a possibility that the operator of the decrypting device 3 is an original addressee of the encrypted document data I, and hence the decrypting device 3 advances the process to S213. By contrast, if the authority changing information M can be acquired as a result of S204, the decrypting device 3 (the control unit 34) advances the process to S206.

In S206, the decrypting device 3 (the control unit 34) acquires a password of the individual operator of the decrypting device 3 and a password of the group to which the operator belongs. The passwords may be acquired by reading the passwords stored in, e.g., the IC card and may also be acquired via the GUI screen displayed on the display 32.

In next S207, the decrypting device 3 (the control unit 34) tries to decrypt all the authority changing information M acquired in S204 by use of the passwords acquired in S206.

In next S208, the decrypting device 3 (the control unit 34) checks whether or not there is the authority changing information M that can be decrypted as the result in S207. Then, there is none of the decrypted authority changing information M, which explicitly proves that the operator has no authority as the proxy, however, the operator has the possibility of being the original addressee, and hence the process proceeds to S213.

In contrast with this, there is one or more pieces of authority changing information M that can be decrypted as the result in S207, the operator is authorized as the proxy, and therefore the process advances to S209.

In S209, the decrypting device 3 (the control unit 34) detects all of the encrypted areas from the encrypted document data I acquired in S201, and calculates the position (coordinates) of each detected encrypted area.

In next S210, the decrypting device 3 (the control unit 34) acquires the area ID respectively from all pieces of authority changing information M decrypted in S207.

In next S211, the decrypting device 3 (the control unit 34) acquires the corresponding position (coordinates) calculated in S209 with respect to each area ID obtained in S210.

In next S212, the decrypting device 3 (the control unit 34) acquires the password of the addressee respectively from all pieces of authority changing information M decrypted in S207. Note that the thus-acquired password of the addressee is not output to the outside and is not therefore leaked out. Upon completion of S212, the decrypting device 3 (the control unit 34) advances the process to S216.

On the other hand, in S213, the decrypting device 3 (the control unit 34) acquires the position (coordinates) of the area designated by the operator via the keyboard or the mouse in the encrypted document data I acquired in S201.

In next S214, the decrypting device 3 (the output unit 36), if the operator is the addressee of the encrypted document data I, displays the GUI screen (password input screen) for accepting an input of the password on the display 32.

In next S215, the decrypting device 3 (the input unit 33, the control unit 34) acquires each password inputted through the operation on the keyboard for the password input screen displayed in S214. When completing S215, the decrypting device 3 (the control unit 34) advances the process to S216.

In S216, the decrypting device 3 (the decrypting unit 35) extracts each range specified by the coordinates acquired in S211 or S213 in the encrypted document data I, then executes the decryption based on the password obtained in S212 or S215, and attaches a partial image obtained by the decryption to the encrypted document data I, thereby obtaining the already-decrypted document data.

In next S217, the decrypting device 3 (the output unit 36) displays the already-decrypted document data obtained in S216 on the display 32. Upon the completion of S217, the processes based on the decryption program are completed.

### <Operation in Embodiment>

An operation of the document data encryption system configured as described above according to the embodiment will hereinafter be described with reference to FIG. 16. An assumption herein is that when the sender of the document data, who has the operating authority of the encrypting device 1, conveys (or transmits the encrypted document data I, or issues the printed material P) the encrypted document data I to the addressee "manager", the addressee "manager" himself or herself neither performs the decryption nor executes the process for the document data subsequent thereto but requests a proxy "section chief" to act for the "manager". Then, it is also assumed that the sender knows one piece or plural pieces of passwords of the "manager", which is or are used between the sender and the "manager", while the "manager" knows one piece or plural pieces of passwords of the "section chief", which are employed between the "manager" and the section chief, however, the section chief does not know any password of the "manager".

Then, the conveying target document data is the document data read by the scanner etc into the encrypting device 1 or generated by the application program in the encrypting device 1, and is herein organized by character strings such as "IMAGE ENCRYPTION", "ENCRYPTED IMAGE", "IMAGE DECRYPTION". Then, a character string consisting of "encryption" and "decryption" in these character strings needs concealing from the third party.

Accordingly, in the encrypting device 1 operated by the sender, three areas in which character strings to be concealed are displayed are designated as the encrypted areas (S003) and are respectively encrypted with the passwords of the "manager" (S006), which are inputted as the encryption passwords associated therewith (S005). The encrypted document data I obtained as a result of this is conveyed to the "manager".

Under the circumstances described above, however, it follows that the printedmaterial P or the e-mail containing the encrypted document data I is transferred to the section chief from the "manager" or, after the sender himself or herself who received a request from the "manager" has changed the destination to the section chief, eventually the section chief receives the printed material P or the e-mail.

On the other hand, the "manager" must generate the authority changing information M by using the decryption authority changing device 2 of which the operation authority is held by the "manager" himself or herself, for attaining this, the "manager" must know the document ID and the area ID in the decryption information generated within the encrypting device 1. At this time, if the printed material P is or the FAX signals are transmitted via an on-hand route of the "manager", the "manager" can recognize the document ID printed in a header position on the printed material P and can determine each area ID on the basis of the position of each encrypted area. Moreover, if the "manager" temporarily receives the e-mail containing the encrypted document data I, the decryption authority changing device 2 can extract the decryption authority information from the header of the document data.

Even in a case other than this, if the "manager" can see the encrypted document data I displayed on the display 12 (e. g. , in a case, though rare, where the sender is identical with the "manager"), the "manager" can know the document ID and each area ID from the displayed content.

The "manager" inputs the thus-known document ID and area ID to the decryption authority changing device 2, and inputs the self-password, the password of the "section chief" and the name of the "section chief"(S102, S104, S106) for every area ID. Then, the decryption authority changing device 2 generates the authority changing information M consisting of, the document ID, the area ID, the password of the "manager" and the name of the "section chief" defined as an assignee of the authority, in which at least the password of the "manager" is encrypted with the password of the "section chief" (S113, S114) for every encrypted area, and the authority changing information M is transmitted to the decrypting device 3 of the "section chief" (S115). The section chief, who operates the decrypting device 3, inputs the self-password (or the password of the group to which the section chief himself or herself belongs) to the decrypting device 3 for every piece of received authority changing information M (S206), thereby trying to decrypt each password of the "manager" (S207). At this time, if the password used for encrypting the password of the "manager" is coincident with the password of the section chief (the password of the group to which the section chief belongs), it follows that the password of the "manager" is decrypted. With respect to the authority changing information M with the thus-decrypted password of the "manager", the encrypted area in the encrypted document data I associated with the tuple of the document ID and the area ID can be decrypted (S216). Accordingly, when the password of the "manager" is decrypted with respect to all pieces of authority changing information M and when the corresponding encrypted area is each decrypted with the key of the "manager", it follows that the already-decrypted document data becomes coincident with the original document data.

### <First Modified Example>

The encrypting device 1 in the embodiment is not necessarily limited to the device which encrypts the whole or a part of the areas of the imaged document data through the imaging process but may also be a device configured such that in a structured document data as in the case of PDF (Portable Document Format), the area defined by coordinates specified with the mouse and the keyboard is stored as the encrypted area in the document data. The first modified example will hereinafter discuss a case of using the encrypting device 1 and the decrypting device 3, which support the structured document.

The encrypted document data generated by the encrypting device 1 in the first modified example is that document structuring elements (characters, graphics, etc) embraced in the encrypted areas are deleted from within the document data, the designated encrypted areas are replaced with black-dotted images, and an abject which is the document structuring elements within the encrypted areas encrypted with the keys (passwords) of the addressee is stored in the header area of the document data.

Note that the header area of the structured document data can contain the document structuring elements encrypted with the plurality of keys. Therefore, in the same way as the encryption based on the imaging process, the encryption can be done with the keys of the addressees different for every area.

The encrypted document data generated by the encrypting device 1 in the first modified example is displayed as the document image with the black-dotted designated area on the display.

Therefore, the decryption authority changing device 2, after the authority changer visually recognizes the encrypted document data displayed on the display, acquires the document ID, the area ID and the password setting for delegation through the operation of the authority changer, and outputs the data with these items of information serving as authority change information. Namely, the decryption authority changing device 2 in the first modified example may have absolutely the same configuration as in the first embodiment. Hence, the descriptions of the configuration and the operation of the authority changing device are omitted.

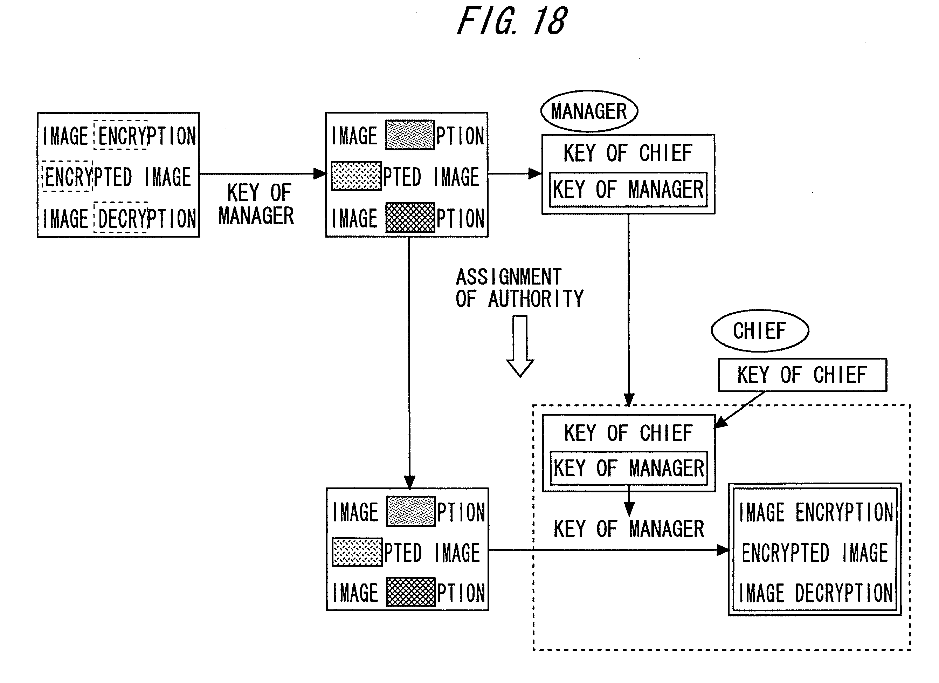

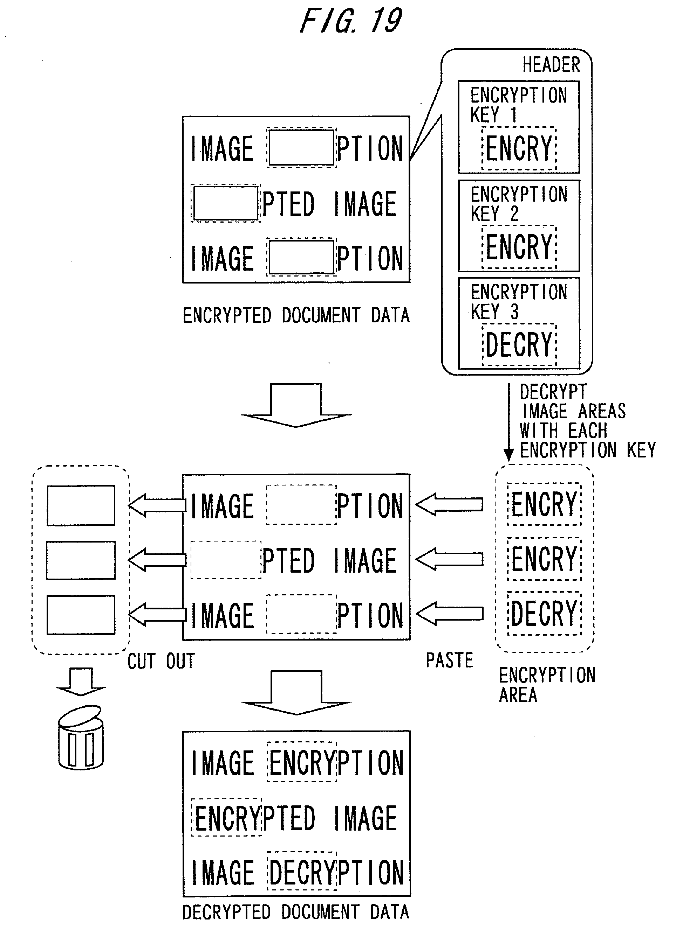

The decrypting device 3 in the first modified example, as illustrated in FIG. 18, decrypts the key (password) of the addressee, which is contained in the authority change information acquired from the decryption authority changing device 2, with the key (password) of the proxy that is inputted by a decipherer, and, as illustrated in FIG. 19, decrypts the information in the encrypted area encrypted with the key (password) of the addressee that is stored in the header area of the encrypted document data by use of the decrypted key of the addressee. Moreover, the original document data is reproduced by deleting the area (attached with the black-dotted image) in the encrypted document data and superposing the information of the encrypted area decrypted with the key of the addressee on this area.

### <Second Modified Example>

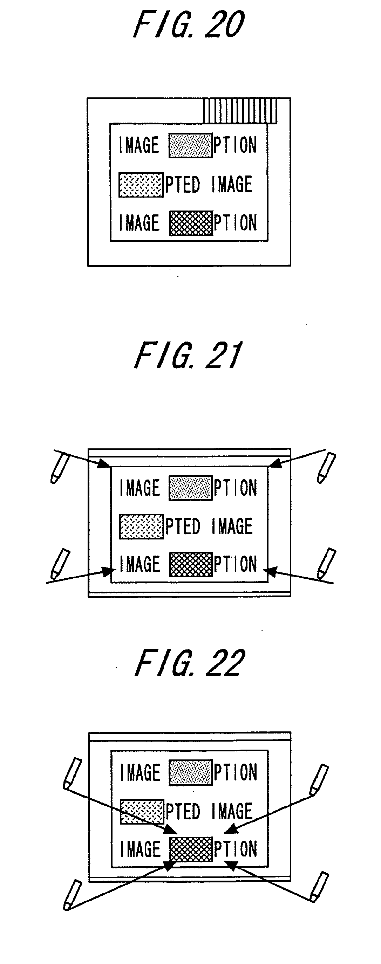

As for printing the document ID onto the printed material P, as depicted in FIG. 20, a barcode generated by coding the document ID may be printed in the header position of the printed material P. In this case, it is difficult for the addressee to recognize the document ID simply by seeing the barcode, and it is therefore desirable that the decryption authority changing device 2 is provided with a function as a barcode reader. Such being the case, in the second modified example of the decryption authority changing device 2 that supports the barcode such as this, the document ID is acquired by capturing the image (s) of the encrypted document data I containing the barcode via the camera or the scanner in place of the processes in S101 and S102 in FIG. 6, then extracting the barcode from the image-captured document data and decrypting the barcode.

Thus, in the case of imaging the encrypted document data I with the camera, the positions (coordinates) of each encrypted area can be acquired in such a way that the addressee does not take the trouble to discriminate the area ID of each encrypted area by exercising logical thinking. To be specific, in the second modified example, as depicted in FIG. 21, after the distortion has been corrected (which is a process of changing (correcting) the document image that should be rectangular into a rectangle through a coordinate converting process) by specifying (touching) four corners, respectively with a touch pen, of the encrypted document data I displayed on a touch panel display 20, the positions (coordinates) of the processing target encrypted area are, as illustrated in FIG. 22, specified by designating (touching) the four corners of each encrypted area in place of the processes in S103 and S104 in FIG. 6.

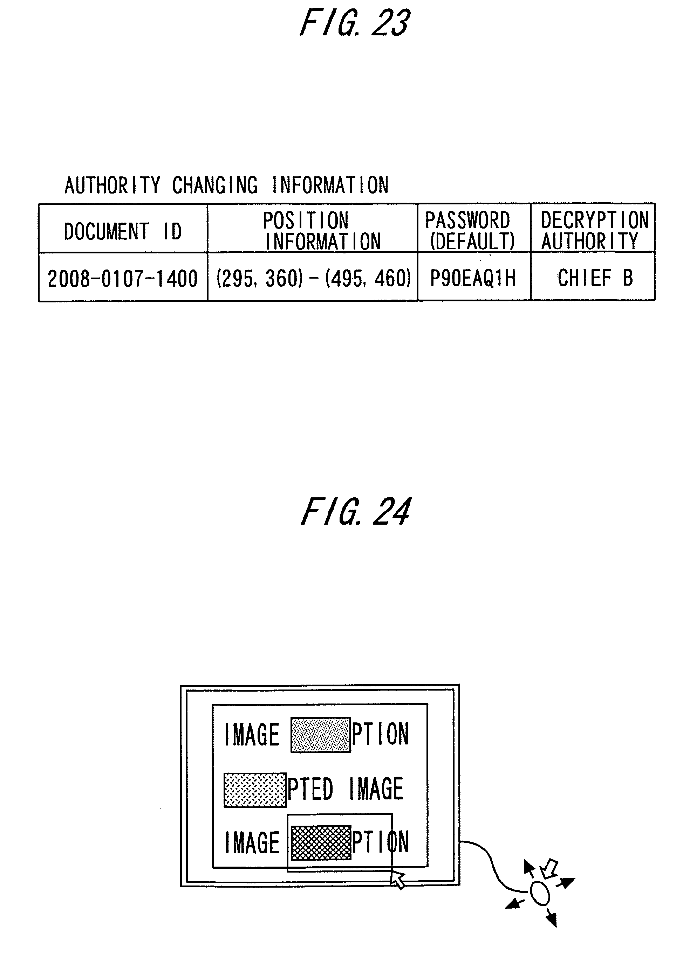

In this case, not the area ID but, instead, the positions (coordinates) of each encrypted area are specified, and therefore the authority changing information M generated in S113 in FIG. 6 is, as depicted in FIG. 23, what the position information (coordinates) is stored as a substitute for the area ID of the encrypted area as compared with the information M in FIG. 15.

### <Third Modified Example>

A third modified example is that in the decryption authority changing device 2, in the case of the encrypted document data I was acquired by e-mail, the input of the area ID and the password of the addressee and the password of the proxy on a per-encryption-area basis is facilitated.

Specifically, the header of the encrypted document data I acquired by e-mail is stored with the decryption authority information organized by, as illustrated in FIG. 10, associating the area ID, the position information and the password of the addressee in addition to the document ID with each other for every encrypted area. Accordingly, the decryption authority changing device 2 in the third modified example reads the document ID directly from this decryption authority information instead of executing the processes in S101 and S102 in FIG. 6.

Moreover, the decryption authority changing device 2 in the third modified example, in place of executing the processes in S103 and S104 in FIG. 6, as depicted in FIG. 24, when an internal position of any one of the encrypted areas is clicked through the mouse, acquires the area ID associated with the encrypted area embracing the clicked position in the range specified by the position information.

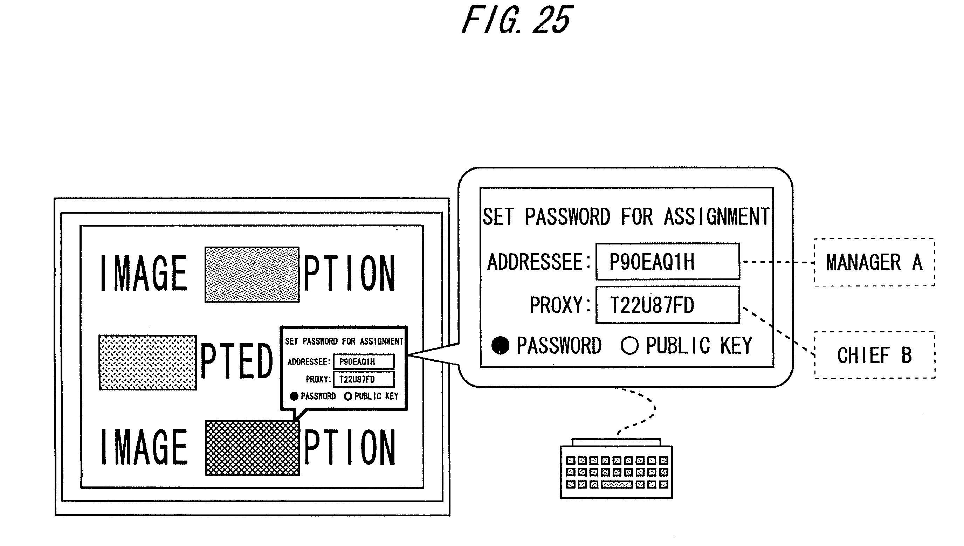

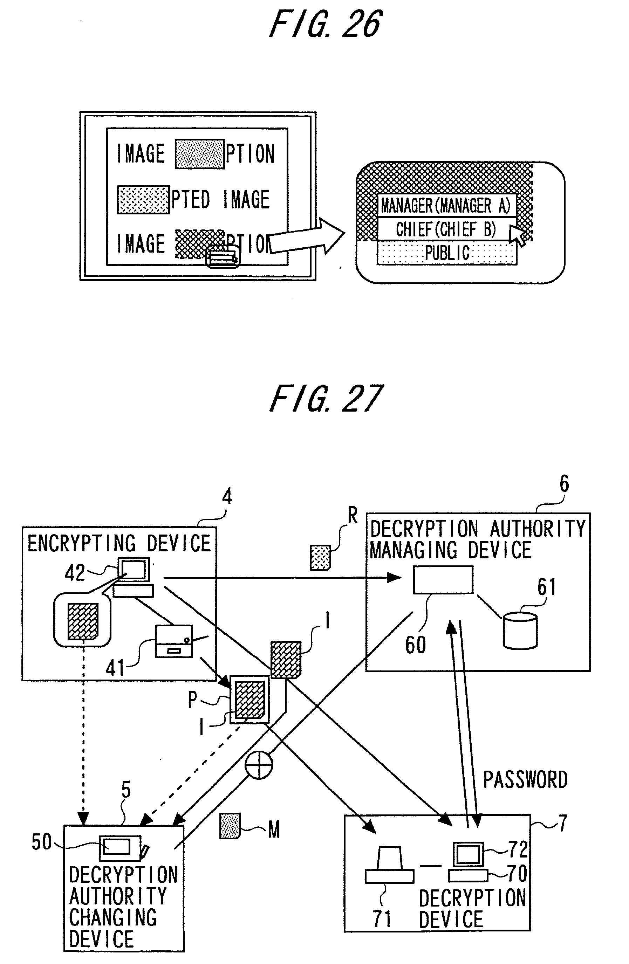

Further, decryption authority changing device 2 in the third modified example, when clicked by the mouse, as the process in S105 in FIG. 6, attaches a balloon dialog as illustrated in FIG. 25 (i.e., the dialog for inputting the password of the addressee and the password of the proxy) to the encrypted area and thus displays the dialog. Similarly, by way of the process in S109 in FIG. 6, a pull-down menu illustrated in FIG. 26 (i.e., the menu for selecting the proxy) is attached to the encrypted area and thus displayed.

Incidentally, in this way, when the encrypted document data I is transmitted by e-mail, it may suffice that the decryption authority changing device 2 stores the authority changing information M in the e-mail and transfers the authority changing information M together with the encrypted document data I to the decrypting device of the proxy. In this case, the decryption authority information stored in the header of the document data contained in the e-mail is deleted, and, instead, the authority changing information M may be stored therein.

### SECOND EMBODIMENT

A second embodiment is characterized in that, as compared with the first embodiment discussed above, the authority changing information M generated by the decryption authority changing device is transmitted to a decryption authority management device, and the decryption authority management device updates the decryption authorityinformation based on the authority changing information M and sends as a response the password of the addressee in response to a request given from the decrypting device operated by the regular proxy.

### <System Architecture>

FIG. 27 is a block diagram schematically illustrating a correlation between the devices configuring the document data encryption system in the second embodiment discussed above. To be specific, the document data encryption system according to the second embodiment is configured by an encrypting device 4, a decryption authority changing device 5, a decryption authority management device 6 and a decrypting device 7. Then, the encrypting device 4 can transmit, via an unillustrated network, the e-mail to the decryption authority changing device 5 and the decrypting device 7, while the encrypting device 4 and the decryption authority changing device 5 can transmit the data to the decryption authority management device 6 via the unillustrated communication network or infrared-ray communications.

### [Encrypting Device]

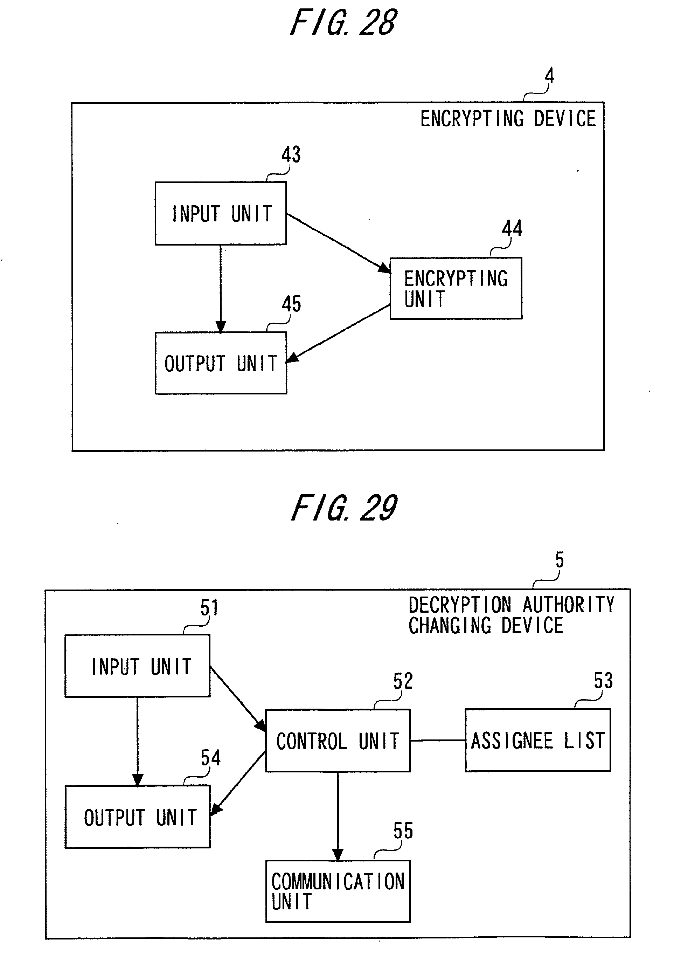

The encrypting device 4 has substantially the same configuration and functions as those in the first embodiment, but has only a different point that an output unit 45 illustrated in FIG. 28, irrespective of transmitting the encrypted document data I by e-mail or FAX signals or outputting the encrypted document data I as the printed material, transmits decryption authority information (FIG. 10) R generated in an encrypting unit 44 to the decryption authority management device 6 via a communication interface. Hence, its description is hereinafter omitted.

### [Decryption Authority Changing Device]

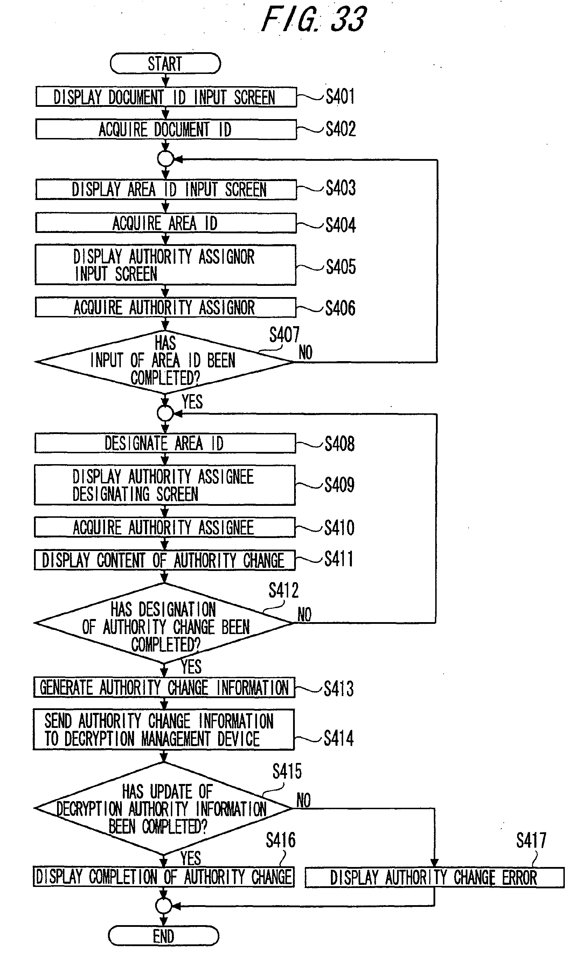

Next, the decryption authority changing device 5 is a communication terminal of which the operating authority is held by the addressee and is a device which generates the authority changing information M organized by items of information such as the ID (document ID) of the encrypted document data I inputted by the addressee, the area ID or the position information (coordinates) for specifying the encrypted area, the name (ID) of the addressee and the name (ID) of the proxy, and then transmits the authority changing information M. The decryption authority changing device 5 is, though the illustration is omitted, constructed of the CPU capable of executing the application, the keyboard including ten keys, the memory stored with the application, a display 50 for displaying the GUI screen, the camera and the communication device. Specifically, the decryption authority changing device 5 is exemplified by a mobile phone such as a smartphone, a PDA (Personal Digital Assistant) and a personal computer. Note that the communication device included in the decryption authority changing device 5 is a communication module connectable to the network such as the mobile phone network. In the second embodiment, the unillustratedmemory of the decryption authority changing device 5 such as this is installed with, as the application, a decryption authority changing program of which a processing flow is depicted in FIG. 33.

FIG. 29 is a block diagram illustrating functions actualized by the CPU when the unillustrated CPU in the decryption authority changing device 5 executes the decryption authority changing program described above. To be specific, as illustrated in FIG. 29, the functions of the decryption authority changing device 5 include an input unit 51, a control unit 52, an assignee list 53, an output unit 54 and a communication unit 55.

The input unit 51 acquires the document ID inputted via the keyboard, the area ID of each encrypted area, and the name of the addressee (the authority assignor) and selective information of the proxy (the authority assignee) with respect to each encrypted area. Note that an individual may be designated to be the proxy and a group including the individual may be designated to be the proxy. In the latter case a password allocated to this group is acquired. This scheme enables a difference to be given to accessing authority of the proxy corresponding to a level of confidentiality of each encrypted area. Then, the input unit 51 notifies the control unit 52 of the thus-acquired document ID, area ID and authority assignee corresponding to each encrypted area. Further, the input unit 51 notifies the output unit 54 of the encrypted document data I for displaying the data I on the display 50 as the reference used for the operator to input the information for specifying the positions of the encrypted area.

The assignee list 53 is a list which lists up the name (ID) of the addressee (the authority changer) holding the operating authority of the decryption authority changing device 5 and the names (IDs) of the individual proxies (the assignees) registered beforehand, and is stored in the memory.

The control unit 52 generates the authority changing information M (FIG. 36) assembled from the name (ID) of the addressee (the assignor) of which the input unit 51 notifies the name (ID) of the proxy (the assignee) stored in the assignee list 53 in the way of being associated with the authority assignee of which the input unit 51 notifies for every tuple of the document ID and the area ID or the position specifying information of the encrypted area of which the input unit 51 notifies. Then, the control unit 52 notifies the output unit 54 and the communication unit 55 of the authority changing information M.

The output unit 54 displays, on the display 50, the contents of the encrypted document data I of which the input unit 51 notifies and the contents of the unencrypted authority changing information M of which the control unit 52 notifies for checking.

The communication unit 55 transmits the authority changing information M of which the control unit 52 notifies to the decryption authority management device 6 via the communication line or the infrared-ray communications.

Note that the addressee, when receiving the encrypted document data I transmitted by e-mail, after the decryption authority changing device 5 temporarily has received the e-mail, may transfer the e-mail to the proxy on another occasion, and may also transfer the e-mail by use of another terminal (such as the decrypting device 7) of which operating authority is held by the addressee himself or herself.

### [Decryption Authority Management Device]

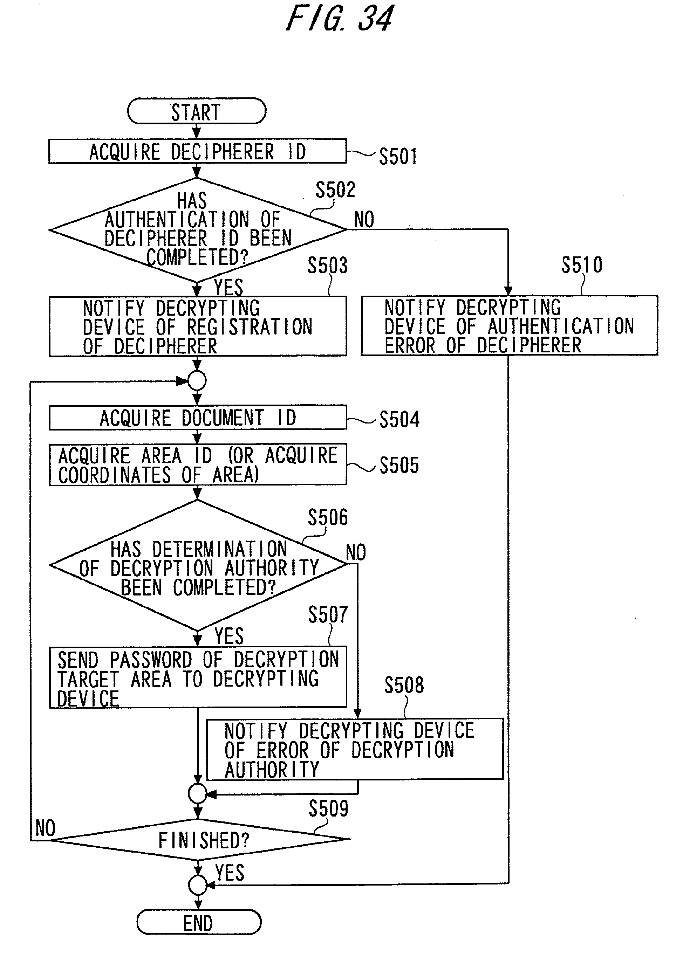

Next, the decryption authority management device 6 is a server device which collates the decryption authority information R and the authority changing information M received respectively from the encrypting device 4 and the decryption authority changing device 5 via the network, for every set of the document ID and the area ID, changes a description given in a "decryption authority" field in the decryption authority information R to the name (ID) of the addressee (assignor) and the name of the proxy (assignee) that are contained in the authority changing information M, and thereafter, when receiving a decryption request message from the decrypting device 7, sends as a response the password contained in the decryption authority information R as far as the operator of the decrypting device 7 is the operator described in the "decryption authority" field in the decryption authority information R thus changed (FIG. 37). This decryption authority management device 6 is constructed of a server body 60 including a CPU (unillustrated), a disc device (unillustrated) installed with a decryption authority management program by which the CPU executes the processes illustrated in FIG. 34 of a processing flow, and a communication interface, and a storage device 61 stored with the data.

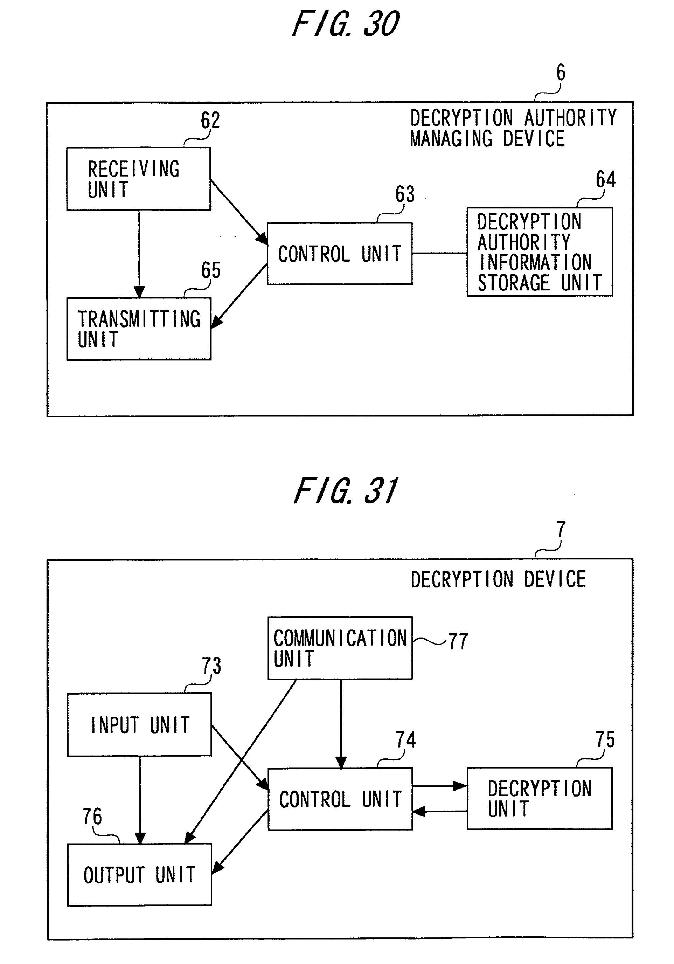

FIG. 30 is a block diagram illustrating functions realized by an unillustrated CPU when this CPU executes the decryption authority management program in the decryption authority management device 6. To be specific, as depicted in FIG. 30, the functions of the decryption authority management device 6 include a receiving unit 62, a control unit 63, a decryption authority information storage unit 64 and a transmitting unit 65.

The receiving unit 62 acquires the decryption authority information R received from the encrypting device 4 via the communication interface, the authority changing information M received from the decryption authority changing device 5, and the decryption request, the proxy ID, the document ID and the area ID that are received from the decrypting device 7. Then, the receiving unit 62 notifies the control unit 63 of the thus-acquired decryption authority information R, authority changing information M, decryption request, proxy ID, document ID and area ID.

The decryption authority information storage unit 64 is the function of storing the decryption authority information R in a storage 61 in response to an instruction given from the control unit 63, and changing and reading the decryption authority information R.

The control unit 63 notifies the decryption authority information storage unit 64 of the decryption authority information R of which the receiving unit 62 notifies, stores the decryption authority information R in the storage 61 and instructs the transmitting unit 65 to give a response about whether the decryption authority information R is successfully stored or not. Further, the control unit 63 changes the description in the "decryption authority" field in the decryption authority information R in accordance with the authority changing information M of which the receiving unit 62 notifies, and instructs the transmitting unit 65 to send a response about whether the description is successfully changed or not. For example, when notified of the authority changing information M having the contents illustrated in FIG. 36 with respect to the decryption authority information R having the contents illustrated in FIG. 10, the "assignee": sectionchiefBcontained in the authority changing information M is added to the description of the "decryption authority" field: "manager A" in the entry (record) containing the same area ID: 03 as the area ID in the authority changing information M in the decryption authority information R containing the same document ID: 2008-0107-1400 as the document ID in the authority changing information M. As a result, the decryption authority information R is updates as depicted in FIG. 37.

Moreover, the control unit 63, when receiving the notification of the decryption request from the receiving unit 62, authenticates the name (ID) of the proxy (decipherer) of which the receiving unit 62 subsequently notifies, and instructs the transmitting unit 65 to send a response about whether it is successfully authenticated or not. Moreover, in case it is successfully authenticated, if the name (ID) of the proxy (assignee) associated with the name (ID) of the proxy (decipherer) of which the receiving unit 62 notifies is contained in the "decryption authority" field of the authority changing information M associated with the tuple of the document ID and the area ID of which the receiving unit 62 notifies subsequently, the transmitting unit 65 is informed of the password read from within the decryption authority information R, and, in other case, the transmitting unit 65 is notified of an authority error message.

The transmitting unit 65 gives the response about whether it is successful or not to the encrypting device 4, the decryption authority changing device 5 or the decrypting device 7 via the communication interface, and transmits the password or the authority error message of which the control unit 63 notifies to the decrypting device 7 as the decryption request sender.

### [Decrypting Device]

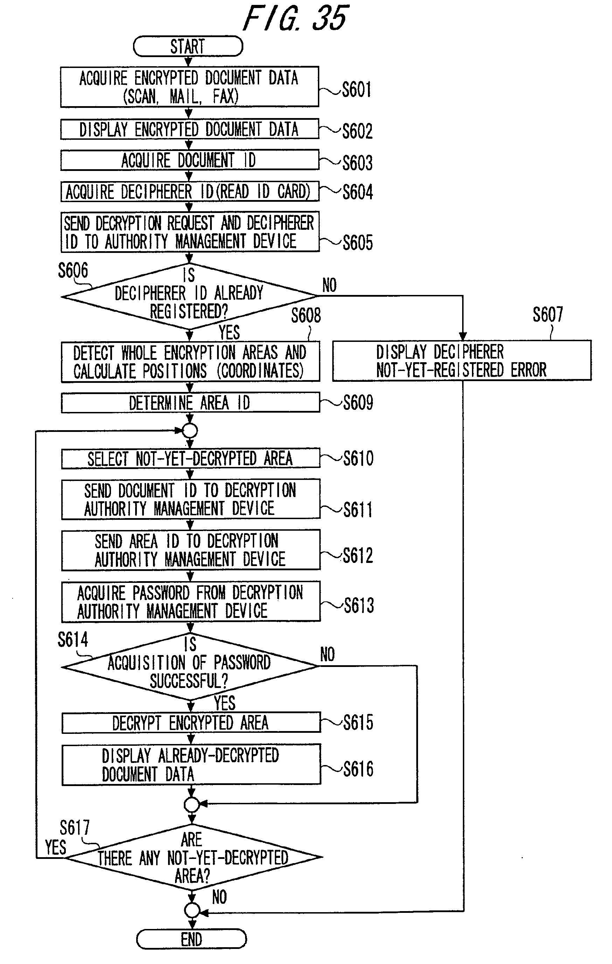

Next, the decrypting device 7 is a computer system operated by the proxy and constructed of a personal computer (PC) 70 having a general configuration including a display 72, a CPU (unillustrated), a disc device (unillustrated) and a communication interface, and being installed with a decryption program for making the CPU execute the processes illustrated in FIG. 35 of a processing flow in the disc device, and a scanner 71 connected thereto. The decrypting device 7, based on the decryption program, directly receives the encrypted document data I from the encrypting device 41 or extracts the encrypted document data I out of the e-mail or the FAX signals transferred by the addressee, or reads the encrypted document data I on the printed material P handed over or sent from the addressee with the scanner 71. Besides, the decrypting device 7 transmits the decryption request described above to the decryption authority management device 6 in accordance with a command given from the operator (the proxy, the decipherer) that is inputted via the keyboard, and decrypts the encrypted area in the encrypted document data I by use of the password sent from the decryption authority management device 6 in response to the decryption request, thereby restoring the original document data.

FIG. 31 is a block diagram illustrating functions actualized by the CPU when the unillustrated CPU executes the decryption program in the decrypting device 7. Namely, as depicted in FIG. 31, the functions of the decrypting device 7 include an input unit 73, a control unit 74, a decrypting unit 75, an output unit 76 and a communication unit 77.

The input unit 73 acquires the encrypted document data I on the printed material P inputted via the scanner 71, and acquires the document ID, the area ID of the encrypted area and the name (ID) of the proxy (decipherer) holding the operating authority of the decrypting device 3, which are inputted via the mouse and the keyboard. Then, the input unit 73 notifies the control unit 74 of the thus-acquired encrypted document data I and the area ID or the position specifying information associated with each encrypted area and the name (ID) of the proxy (decipherer). Further, the input unit 73 notifies the output unit 76 of the encrypted document data I for displaying the data I on the display 72 as the reference used for the operator to input the position specifying information for specifying the positions of the encrypted area.

The communication unit 77 acquires the encrypted document data I in the e-mail or the FAX signals received via the communication interface, and sends as a response the encrypted document data I to the control unit 74 and the output unit 76. Moreover, the communication unit 77 transmits, in response to an instruction given from the control unit 74, the decryption request etc to the decryption authority management device 6 via the communication interface, then receives the password sent as a response from the decryption authority management device 6 in response to this request, and notifies the control unit 74 of this password.

The control unit 74 instructs the communication unit 77 to transmit the decryption request and the name (ID) of the proxy (decipherer), the document ID and the area ID of which the input unit 73 notifies. Further, the control unit 74 notifies the decrypting unit 75 of the password received from the communication unit 77 together with the area ID and the encrypted document data I of which the input unit 33 informs, and requests the decrypting unit 75 to decrypt the encrypted area associated with the area ID. Then, upon receiving the decrypted document data (already-decrypted document data) with respect to all of the encrypted areas capable of being decrypted from the decrypting unit 75, the control unit 74 notifies the output unit 76 of the already-decrypted document data.

The decrypting unit 75 decrypts the encrypted document data I received from the control unit 74 with respect to every encrypted area specified by the area ID received from the control unit 74 by employing the password received from the control unit 74 in so far as the proxy holding the operating authority of the decrypting device 7 can decrypt, and sends the already-decrypted document data as a result of the decryption by way of a response to the control unit 74.

The output unit 76 displays, on the display 72, the encrypted document data I of which the input unit 73 or the communication unit 77 notifies and the already-decrypted document data of which the control unit 74 notifies.

### <Data Processing Flow>

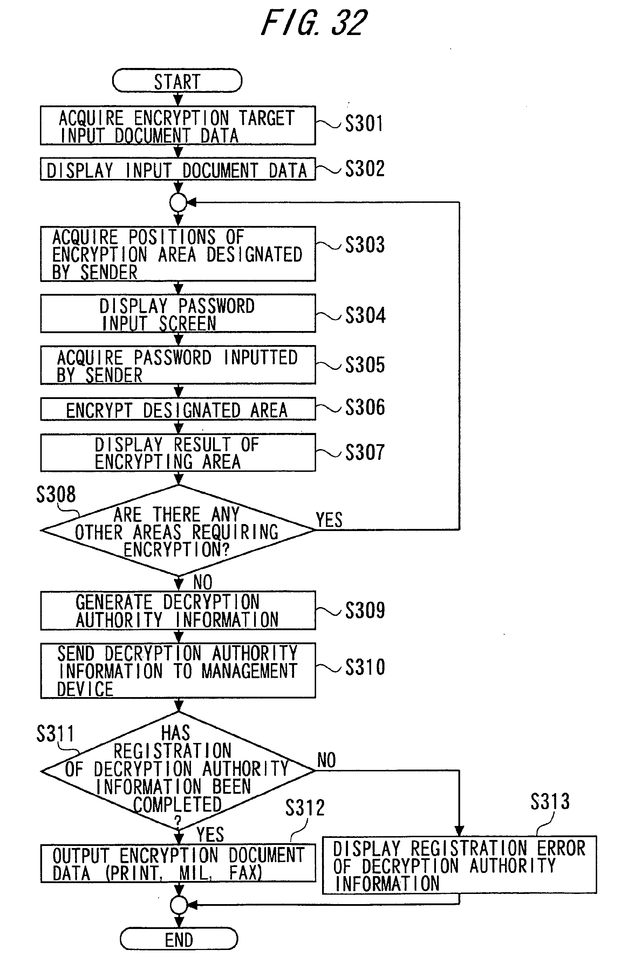

A data processing flow of the encrypting device 4, the decryption authority changing device 5, the decryption authority management device 6 and the operating authority of the decrypting device 7, which constitutes thus-configured document data encryption system in the second embodiment, will hereinafter be described with reference to flowcharts in FIGS. 32 through 35.

### [Encrypting Device]

FIG. 32 is the flowchart illustrating the encryption process executed by the CPU according to the encryption program installed into the disc device of the encrypting device 4. A start of the process based on this flowchart is triggered by inputting a predetermined command for reading the original document data to the keyboard. The processes in S301 through S308 in the encryption process are absolutely the same as those in S001 through S008 in FIG. 5, and hence their explanations are omitted.

In S309 executed when completing the processes in S303 through S307 for all of the areas requiring the encryption, the encrypting device 4 (the document data encrypting unit 44) generates, as depicted in FIG. 10, the table-formatted decryption authority information R in which every one record consists of the document ID, the area ID (a serial number allocated in a raster scan sequence to the encryption area with its position specified in S303), the area position information (a coordinate range of the encryption area with its position specified in S303), the password and the decryption authority.

In next step S310, the encrypting device 4 (the output unit 45) transmits the decryption authority information R generated in S309 to the decryption authority management device 6 via the communication interface, and requests the decryption authority management device 6 to register this information.

In next step S311, the encrypting device 4 checks whether or not there is a response purporting that the decryption authority information R is registered in the storage 6 of the decryption authority management device 6 as a result of the request in S311. Then, if there is the response purporting that the decryption authority information R is registered, the encrypting device 4 (the output unit 45) outputs, as the printed material P, the encrypted document data I with the completion of the encryption process for all of the encryption areas from the printer in accordance with the sender's designation inputted via the keyboard, and transmits the encrypted document data I to the addressee in the way of being attached to the e-mail or as carried on the FAX signals.

Whereas if there is not the response purporting that the decryption authority information R is registered or if there is a response purporting that the registration gets into a failure, the encrypting device 4 (the output unit 45) displays on the display 42 a message purporting that an error occurs in the registration of the decryption authority information R.

Upon completion of S312 or S313, the encrypting device 4 completes all of the processes based on this encryption processing program.

### [Decryption Authority Changing Device]

FIG. 33 is a flowchart illustrating the encryption process executed by the CPU according to the authority changing program installed into the memory of the decryption authority changing device 5. A start of the processes based on this flowchart is triggered by inputting a predetermined command to the keyboard. In first step S401 after starting this encryption process, the decryption authority changing device 5 (the output unit 54) displays a GUI screen (see FIG.11) for accepting the input of the document ID on the display 50. The addressee is requested to input the document ID printed in the header area of the printed material P to a text box on the GUI screen.

In next step S402, the decryption authority changing device 5 (the input unit 51, the control unit 52) acquires the document ID inputted through the operation on the keyboard about the GUI screen displayed in S401.

Subsequently, a loop process in S403 through S407 is executed for acquiring the password for each encrypted area of the encrypted document data I. In first step S403 after entering this loop process, the decryption authority changing device 5 (the output unit 54) displays the GUI screen (see FIG. 24) for accepting the input of the area ID on the display 20.

In next step s404, the decryption authority changing device 5 (the input unit 51, the control unit 52) acquires the area ID inputted through the operation on the keyboard about the GUI screen displayed in S403.

In subsequent step S405, the decryption authority changing device 5 (the output unit 54) displays on the display 50 the GUI screen (unillustrated) for accepting the input of the name (ID) of the addressee (the authority assignor) associated with the area ID acquired in S404.

In next step S406, the decryption authority changing device 5 (the input unit 51, the control unit 52) acquires the name (ID) of the addressee (the authority assignor) inputted through the operation on the keyboard about the GUI screen displayed in S405.

In subsequent step S407, the decryption authority changing device 5 checks whether or not the sender inputs a purport that there remains unprocessed encrypted area or a purport that processing for all the encrypted areas terminate via the keyboard. Then, if the sender inputs the purport that there remains unprocessed encrypted area, the decryption authority changing device 5 loops back the operation to S403 in order to execute the loop process for the unprocessed encrypted area. Whereas if inputting the purport that processing of the encrypted areas terminate, the processing proceeds to S408.

Subsequently, a loop process in S408 through S412 is executed for acquiring the authority assignee for each encrypted area of the encrypted document data I. In first step S408 after entering this loop process, the decryption authority changing device 5 (the input unit 51, the control unit 52) specifies one of the unprocessed area IDs acquired in S404.

In next step S409, the decryption authority changing device 5 (the output unit 54), for acquiring the authority assignee with respect to the encrypted area identified by the area ID specified in S408, displays the GUI screen (see FIG. 26) for accepting the input of the authority assignee on the display 50.

In subsequent step S410, the decryption authority changing device 5 (the input unit 51, the control unit 52) acquires the authority assignee selected through the operation on the keyboard for the GUI screen displayed in S408.

In next step S411, the decryption authority changing device 5 (the output unit 54) displays on the display 50 the authority changing content, i.e., the name of the authority assignee acquired in S410 with respect to the area ID specified in S408.

In subsequent step S412, the decryption authority changing device 5 (the input unit 51, the control unit 52) checks whether or not the area IDs of all of the encrypted areas are completely specified in S408. Then, if the area IDs of all of the encrypted areas are not yet completely specified, the processing is looped back to S408. Whereas if the area IDs of all of the encrypted areas are completely specified, the processing proceeds to S413.

In S413, the decryption authority changing device 5 (the control unit 52) combines, for every area ID, the name (ID) of the addressee that is acquired in S406 in accordance with the area ID, the name (ID) of the authority assignee that is acquired in S410 and the document ID acquired in S402, thereby generating the authority changing information M in the format illustrated in FIG. 36.

In next step S414, the decryption authority changing device 5 (the control unit 52, the communication unit 55) transmits the authority changing information M generated in S413 to the decryption authority management device 6 and requests the decryption authoritymanagement device 6 to update the decryption authority information R having the same document ID.

In subsequent step S415, the decryption authority changing device 5 (the control unit 52, the communication unit 55) checks whether or not there is a response purporting that the decryption authority information R is completely changed as a result of the request in S414. Then, in the case of receiving the response purporting that the decryption authority information R is completely changed, the decryption authority changing device 5 (the output unit 54) displays on the display 50 a message purporting that the decryption authority information R is completely changed.

By contrast, in the case of receiving none of the response purporting that the decryption authority information R is completely changed or receiving a purport that the change of the decryption authority information R gets into a failure, the decryption authority changing device 5 (the output unit 54) displays on the display 50 a message purporting that an error occurs in changing the decryption authority information R.

Upon completion of S416 or S417, the decryption authority changing device 5 completes all the processes based on this authority change processing program.

### [Decryption Authority Management Device]

FIG. 34 is a flowchart illustrating processes executed when receiving a decryption request from the decrypting device 7 in the processes executed by the CPU according to a decryption program installed into the disc device of the decryption authority management device 6. In first step S501 after starting the processes in this flowchart, the decryption authority management device 6 (the control unit 63) waits for the name (ID) of the proxy (decipherer) being transmitted from the decrypting device 7, thus acquiring the name (ID).

In next step S502, the decryption authority management device 6 (the control unit 63) executes an authentication process about the name (ID) of the proxy (decipherer) that is acquired in S501 according to a known method. For example, the decryption authority management device 6 (the control unit 63) registers a tuple of the name (ID) of each individual decipherer and the password in the storage 61 beforehand, and it proves that authentication becomes successful if the tuple of the name (ID) of the proxy (decipherer) and the password transmitted while being attached to this name is registered in the storage 61. Then, the decryption authority management device 6 (the control unit 63), if the authentication is unsuccessful in S502, notifies the decrypting device 7 as the decryption requester of an error in the authentication of the decipherer via the transmitting unit 65 in S510, and terminates this process.

Whereas if the authentication is successful in S502, the decryption authority management device 6 notifies the decrypting device 7 of the purport that the decipherer has already been registered in S503. Upon completion of S503, the decryption authority management device 6 advances the process to S504.

In S504, the decryption authority management device 6 waits for the document ID being transmitted by the decrypting device 7 and thus acquires the document ID.

Subsequently, the decryption authority management device 6 executes a loop process in S505 through S509 in order to transmit the password about each encrypted area of the encrypted document data specified by the document ID acquired in S504. In first step S505 after entering this loop process, the decryption authority management device 6 waits for the area ID being transmitted by the decrypting device 7, and thus acquires the area ID.

In next step S506, the decryption authority management device 6 determines as to the decryption authority specified by the area ID on the basis of knowing whether or not the name (ID) of the decipherer acquired in S501 is contained (registered) in the "decryption authority" field in the entry of the area ID acquired in S503 in the decryption authority information R containing the document ID obtained in S504. Then, if the decryption authority is permitted because the name (ID) of the decipherer is contained in the "decryption authority" field, the decryption authority management device 6 (the control unit) transmits the password for the encrypted area to the decrypting device 7, and advances the process to S509.

Whereas if the decryption authority is not permitted because the name (ID) of the decipherer is not contained in the "decryption authority" field, the decryption authority management device 6 (the control unit) transmits a decryption authority error message to the decrypting device 7, and advances the process to S509.

In S509, the decryption authority management device 6 checks whether or not the notification of the area ID from the decrypting device 7 is finished. Then, if the decrypting device notifies of the next area ID, the decryption authority management device 6 loops back the process to S504. By contrast, if the decrypting device 7 does not transmit the next area ID (if a predetermined period of timeout time elapses, or if the decrypting device 7 notifies of an end message), the decryption authority management device 6 terminates this process.

### [Decrypting Device]

FIG. 35 is a flowchart illustrating the decryption process executed by the CPU according to the decryption program installed into the decrypting device 7. A start of the processes based on this flowchart is triggered by inputting a predetermined command to the keyboard. In first step S601 after starting this decryption process, the decrypting device 7 (the input unit 33 or the communication unit 37) acquires the decryption target encrypted document data I in the way described above.

In next step S602, the decrypting device 7 (the output unit 36) displays the encrypted document data I acquired in S601 on the display 32.

In subsequent step S603, the decrypting device 7 (the control unit 34) acquires the document ID of the encrypted document data I that is obtained in S601. To be specific, the decrypting device 7 (the control unit 34) extracts, in the case of obtaining the encrypted document data I by e-mail, the document ID from the decryption authority information R stored in the header of the document data. By contrast, in the case of acquiring the encrypted document data I with the scanner 31 or by way of the FAX signals, the document ID is obtained through the same processes as in S401 and S402 in FIG. 6.

In next step S604, the decrypting device 7 (the control unit 74) acquires the name (ID) and the password of the individual operator (decipherer) of the decrypting device 7 and the name (ID) and the password of the group to which the operator (decipherer) belongs. The name (ID) may be acquired by reading these items of information stored in, e.g., an IC card and may also be acquired via the GUI screen displayed on the display 72.

In next step S605, the decrypting device 7 (the control unit 74) transmits the decryption request and the name (ID) and the password of the decipherer, which are acquired in S604, to the decryption authority management device 6.

In subsequent step S606, the decrypting device 7 (the control unit 74) determines whether the authentication gets successful or not on the basis of the result of the authentication by the decryption authority management device 6 in S502. Then, if the authentication gets into the failure (in the case of receiving the error message in S503), the decrypting device 7 displays an error that the decryption has not yet been requested on the display 72 in S607, and terminates this decryption process.

By contrast, if the authentication becomes successful, in S608, the decrypting device 7 detects the encrypted areas from the encrypted document data I acquired in S601 and calculates the respective positions (head coordinates).

In next step S609, the decrypting device 7 determines the respective area IDs on the basis of the sequence conforming to the raster scanning sequence according to the head coordinates of the respective encrypted areas, which are calculated in S608.

Subsequently, the decrypting device 7 executes a loop process in S610 through S617 for performing the decryption for every encrypted area. In first step S610 after entering this loop process, the decrypting device 7 selects any one of the encrypted areas.

In next step S611, the decrypting device 7 transmits the document ID acquired in S603 to the decryption authority management device 6.

In subsequent step S612, the decrypting device 7 transmits the area ID, determined in S609, of the encrypted area selected in S610 to the decryption authority management device 6.

In next step S613, the decrypting device 7 waits for the password being transmitted by the decryption authority management device 6 in S507 or the decryption authority error (message) being transmitted in S508 and, when receiving any one of the password and the error message, checks in next step S614 whether the password is successfully acquired or not. Then, if failing to acquire the password, i. e. , in the case of receiving the decryption authority error, the decrypting device 7 advances the process directly to S617.

Whereas if the password is successfully acquired, in S615, the decrypting device 7 decrypts the encrypted area selected in S610 by use of the password obtained in S613.

In next step S616, the decrypting device 7 displays on the display 72 the already-decrypted document data obtained as the result of S615 executed up to that point of time. When completing S616, the decrypting device 7 advances the process to S617.

In S617, the decrypting device 7 checks whether an unprocessed area remains or not. Then, if an unprocessed area remains, the decrypting device 7 loops back the process to S610. Whereas if an unprocessed areas does not remain, the decrypting device 7 terminates this decryption process.

### <Operation of Embodiment>

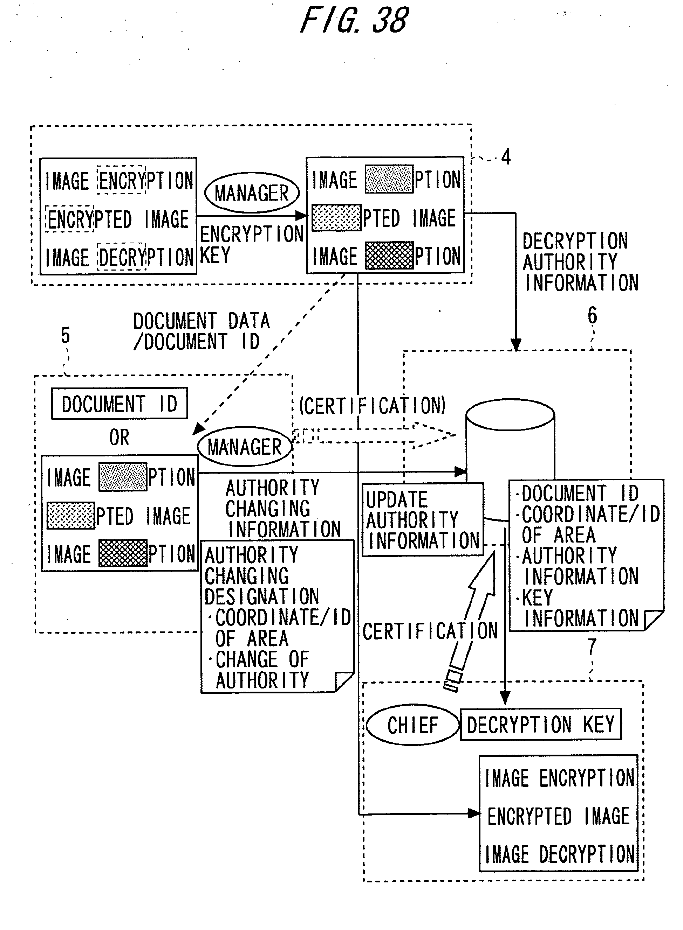

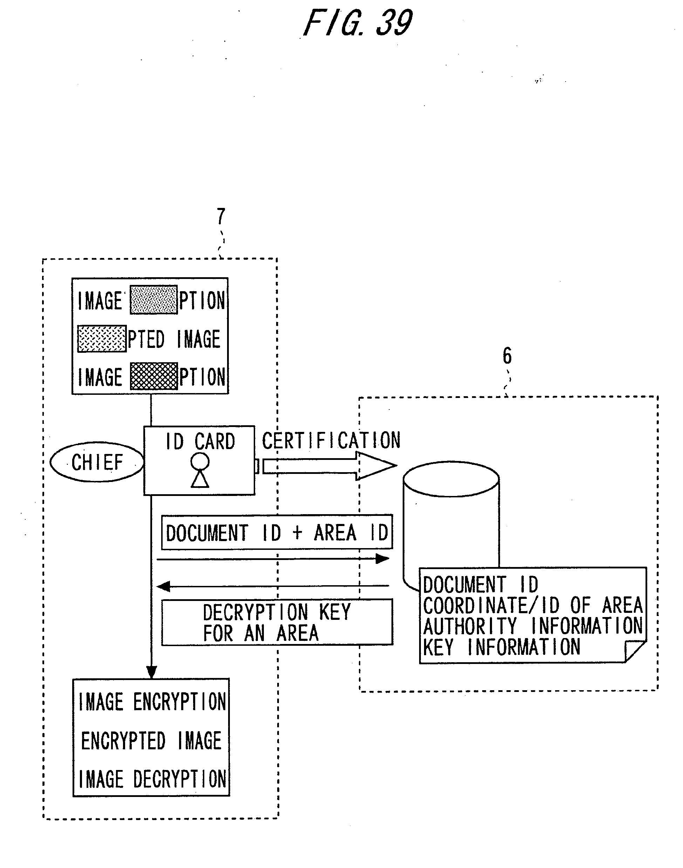

The operation of the thus-configured document data encryption system according to the second embodiment will hereinafter be described with reference to FIGS. 38 and 39. In the same way as in the case of FIG. 16, an assumption herein is that when the sender of the document data, who has the operating authority of the encrypting device 4, conveys (or transmits the encrypted document data I, or issues the printed material P) the encrypted document data I to the addressee "manager", the addressee "manager" neither performs the decryption nor executes the process for the document specified by the document data subsequent thereto by himself or herself but requests the proxy "section chief" to act for the "manager". Then, it is also assumed that the sender knows one piece or plural pieces of passwords of the "manager", which is or are used between the sender and the "manager", however, the section chief does not know any password of the "manager".

Then, the conveying target document data is an image of the document read by the scanner etc into the encrypting device 4 or generated by the application program in the encrypting device 4, and is herein organized by character strings such as "Image encryption Encrypted image Image decryption". Then, a character string consisting of "encryption" and "decryption" in these character strings needs encrypting from the third party.

Accordingly, in the encrypting device 4 operated by the sender, three areas in which character strings to be concealed are displayed are designated as the encrypted areas (S303) and are respectively encrypted with the passwords of the "manager" (S306), which are inputted as the encryption passwords associated therewith (S305). The encrypted document data I obtained as a result of this is conveyed to the "manager".

Under the circumstances described above, however, it follows that the printedmaterial P or the e-mail containing the encrypted document data I is transferred to the section chief from the "manager" or, after the sender himself or herself who received a request from the "manager" has changed the destination to the section chief, eventually the section chief receives the printed material P or the e-mail.

Along with this, the encrypting device 4 generates the decryption authority information R which lists up the area ID, the position information (coordinates), the password of the "manager" that is used for the encryption and the decryption authority with respect to each area of the encrypted document data I (S309), and transmits the decryption authority information R to the decryption authority management device 6 (S310).

On the other hand, the "manager" inputs the document ID and each area ID to the decryption authority changing device 5, and inputs the self-name (ID) and the name (ID) of the section chief for every area ID (S402, S404, S406, S408). Then, the decryption authority changing device 5 generates the authority changing information M assembled from the document ID, the area ID, the name (ID) of the "manager" as the authority assignor and the name (ID) of the section chief as the authority assignee for every encrypted area(S413), and transmits this information M to the decryption authority management device 6 (S414).

The decryption authority management device 6 stores the decryption authority information R received from the encrypting device 4 in the storage 61, and thereafter, when receiving the authority changing information M from the decryption authority changing device 5, additionally enters the name (ID) of the section chief in the former information in the decryption authority field of the decryption authority information R associated with the document ID and the area ID in the authority changing information M.

Thereafter, the section chief, who operates the decrypting device 7, reads the document ID of the received encrypted document data I (S603), inputs the self-name (ID) to the decrypting device 7 (S604), and transmits this information to the decryption authority management device 6 (S605, S501). The decryption authority management device 6, when authenticating the received name (ID) of the section chief (S502), notifies the decrypting device 7 of a purport of its being already registered (S503). Thereafter, the decrypting device 7 transmits the document ID and the area ID to the decryption authority management device 6 (S611, S612, S504, S505), then the decryption authority management device 6 determines the decryption authority based on the decryption authority information R (S506) and, if the name (ID) of the section chief is registered in association with these two IDs, sends as a response the password registered in association therewith to the decrypting device 7 (S507). The decrypting device 7 decrypts the encrypted area specified by the area ID in the encrypted document data I specified by the document ID by use of the received password (S613, S614) (S615), and displays the decrypted encrypted area (S616). Accordingly, when decrypting all of the encrypted areas, it follows that the decrypted document data becomes coincident with the original document data.

### <Modified Example of Second Embodiment>

In the same way as in the modified example of the first embodiment, the encrypting device, which does not use the imaging process (the encryption process employing the scramble) of the preceding application, replaces the area designated as the encrypted area with the black-dotted image in the structured document data such as the PDF, deletes the document components (the characters, the graphics) within the area, encrypts the deleted document components with the keys (passwords) for the respective areas, and stores the encrypted areas in the header area of the document data. Further, the decrypting device in the present modified example decrypts the document components of each area contained in the header area of the document data by use of the decryption keys (passwords) for the respective encrypted areas that are received from the decryption authority management device, replaces the document components with the black-dotted image on the encrypted document data, thereby restoring the document data. The encrypting unit of the encrypting device and the decrypting unit of the decrypting device have the same configurations and the same operations as those in the modified example of the first embodiment, and hence their explanations are omitted.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment of the present inventions have been described in detail, it should be understood that the various changes, substitutions, and alterations could be made hereto without departing from the spirit and scope of the invention.

## Claims

1. A document data encryption method of encrypting document data that is to be conveyed to an addressee in a mode where it is decrypted with a key for the addressee, and decrypting the document data by use of the key, said method comprising:
making a first terminal encrypt the key for the addressee in a mode where it is decrypted with a key for a proxy to whom the document data is transferred, and transmit the encrypted key for the addressee to the proxy; and
making a second terminal, operated by the proxy, decrypt the key for the addressee by employing the key for the proxy, and decrypt the document data by use of the decrypted key for the addressee.

2. A document data encryption method according to claim 1, wherein the key for the addressee is a common key shared for the encryption and the decryption.

3. A document data encryption method according to claim 1, wherein the key for the proxy is a secret key for the proxy, and the key for the addressee is encrypted with a public key associated with the secret key.

4. A document data encryption method according to claim 1, wherein only a part of the document data is encrypted and thus conveyed.

5. A document data encryption method according to claim 4, wherein a plurality of areas of the document data is respectively encrypted in the mode where it is decrypted with the keys of the addressee, which are different from each other.

6. A document data encryption method according to claim 4, wherein the keys of the passwords used for encrypting the plurality of areas of the document data are respectively encrypted by use of the keys of the proxy, which are different from each other.

7. A document data encryption system for encrypting document data that is to be conveyed to an addressee in a mode where it is decrypted with a key for the addressee, and decrypting the document data by use of the key, said system comprising:
an encrypting device encrypting the document data in the mode where it is decrypted with the key for the addressee;
a decryption authority changing device encrypting the key for the addressee in a mode where it is decrypted with a key for the proxy to whom the document data is transferred, and transmitting the encrypted key for the addressee or the encrypted password to the proxy; and
a decrypting device decrypting the key for the addressee by use of the key for the proxy, and decrypting the transferred document data by use of the decrypted key for the addressee.

8. A document data encryption method of encrypting document data that is to be conveyed to an addressee in a mode where it is decrypted with a key for the addressee, and decrypting the document data by use of the key, said method comprising:
making an encrypting device encrypt the document data that is to be conveyed to the addressee in a mode where it is decrypted with the key for the addressee, and output the encrypted document data, and transmit decryption authority information assembled in a way that identifying information of the document data is associated with the key for the addressee to a server;
making said server store the received decryption authority information in a storage device;
making a first terminal transmit authority change information assembled in a way that associates the identifying information of the document data is associated with identifying information of a proxy to whom the document data is transferred to said server;
making said server add the proxy identifying information contained in the authority change information to the decryption authority information in said storage device, which contains the identifying information of the same document data as the received authority change information;
making a second terminal transmit a decryption request containing the identifying information of the transferred document data and the identifying information of the proxy to said server;
making said server transmit, as far as the same identifying information of the proxy as the identifying information in the decryption request is contained in the decryption authority information in said storage device, which contains the identifying information of the same document data as in the decryption request, the key for the addressee that is contained in the decryption authority information to a second terminal defined as a sender of the decryption request; and
making said second terminal decrypt the document data by use of the received key for the addressee.

9. A document data encryption method according to claim 8, wherein said encrypting device encrypts a plurality of areas of the document data in the mode where it is decrypted with the key for the addressee that are different from each other,
said first terminal generates the authority change information for every area and transmits the authority change information to said server, and
said server adds the identifying information of the proxy to the decryption authority information for every area.

10. A document data encryption system for encrypting document data that is to be conveyed to an addressee in a mode where it is decrypted with a key for the addressee, and decrypting the document data by use of the key, comprising:
an encrypting device which encrypts the document data that is to be conveyed to the addressee in the mode where it is decrypted with the key for the addressee, then outputting the document data, and transmitting decryption authority information assembled in a way that identifying information of the document data is associated with the key for the addressee to a server;
a decryption authority changing device which transmits authority change information assembled in a way that the identifying information of the document data is associated with identifying information of a proxy to whom the document data is transferred to said server;
a server which stores the received decryption authority information in a storage device, adds the identifying information of the proxy that is contained in the authority change information to the decryption authority information in said storage device that contains the identifying information of the same document data as the received authority change information, and transmits, as far as the same identifying information of the proxy as the identifying information in the decryption request is contained in the decryption authority information in said storage device, which contains the identifying information of the same document data as in the decryption request, the key for the addressee that is contained in the decryption authority information to a sender of the decryption request; and
a decrypting device which generates and transmits the decryption request to said server, and decrypts the document data by use of the key for the addressee, which is received from said server.
